(19) **Europäisches Patentamt**
**European Patent Office**
**Office européen des brevets**

(11) **EP 4 095 740 B1**

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(51) Internationale Patentklassifikation (IPC):
**G06K 7/10** (2006.01)

(21) Anmeldenummer: **21176344.6**

(52) Gemeinsame Patentklassifikation (CPC):
**G06K 7/10009; G06K 7/10019**

(22) Anmeldetag: **27.05.2021**

(54) **VERFAHREN ZUM AUSLESEN, ZUR SELEKTION UND MELDUNG EINER ANZAHL AUS EINER VIELZAHL VON BERÜHRUNGSLOS AUSLESBAREN TRANSPONDERN SOWIE EINE VORRICHTUNG ZUM AUSLESEN, ZUR SELEKTION UND MELDUNG EINER ANZAHL AUS EINER VIELZAHL VON BERÜHRUNGSLOS AUSLESBAREN TRANSPONDERN SOWIE KALIBRIERVERFAHREN**

METHOD FOR READING, SELECTING AND REPORTING A NUMBER OF CONTACTLESSLY READABLE TRANSPONDERS AND A DEVICE FOR READING, SELECTING AND REPORTING A NUMBER OF CONTACTLESSLY READABLE TRANSPONDERS AND CALIBRATION METHOD

PROCÉDÉ DE LECTURE, DE SÉLECTION ET DE NOTIFICATION D'UN NOMBRE À PARTIR D'UNE PLURALITÉ DE TRANSPONDEURS LISIBLES SANS CONTACT, AINSI QUE DISPOSITIF DE LECTURE, DE SÉLECTION ET DE NOTIFICATION D'UN NOMBRE À PARTIR D'UNE PLURALITÉ DE TRANSPONDEURS SANS CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.11.2022 Patentblatt 2022/48**

(60) Teilanmeldung:
**22200145.5 / 4 134 866**

(73) Patentinhaber: **Feig Electronic GmbH**
**35781 Weilburg (DE)**

(72) Erfinder: **Meißner, Wolfgang**
**35781 Weilburg (DE)**

(74) Vertreter: **Knefel, Cordula**
**Wertherstrasse 16**
**35578 Wetzlar (DE)**

(56) Entgegenhaltungen:
**EP-A1- 2 560 125    EP-A1- 2 990 989**

**Beschreibung**

Die Erfindung betrifft ein Verfahren zum Auslesen, zur Selektion und Meldung einer Anzahl aus einer Vielzahl von berührungslos auslesbaren Transpondern an eine Auswerteeinheit sowie eine Vorrichtung zum Auslesen, zur Selektion und Meldung einer Anzahl aus einer Vielzahl von berührungslos auslesbaren Transpondern an eine Auswerteeinheit sowie ein Kalibrierverfahren.

Zur berührungslosen Identifizierung von Waren und Gegenständen aller Art werden häufig berührungslos auslesbare Transponder (englisch: "Tag") der RFID-Technologie eingesetzt. Wegen der höheren Reichweite werden anstelle von HF-RFID-Transpondern (HF = High Frequency) vermehrt UHF-RFID-Systeme eingesetzt. Die Anwendungsgebiete können in automatisierten Fertigungsanlagen, in der Erkennung von Waren in Regalen, in einer Artikelsicherung, bei Förderbändern, an Mitarbeiterarbeitsplätzen, zur Erfassung von Dokumenten aller Art, Erfassung und Ausbuchung von Wäsche in Wäschereien oder Reinigungen, von Büchern in Bibliotheken, in der Logistik, im Medikamentenbereich, bei der Konfektionierung usw. liegen.

Die höhere Reichweite bei UHF-RFID-Systemen hat zum Nachteil, dass oft auch ungewollt mehrere Transponder gleichzeitig empfangen werden, beispielsweise in Folge von so genannten "Überreichweiten". Für solche Fälle sind bekannte RFID-Schreib-/Lesegeräte oder RFID-Lesegeräte mit Filtereinrichtungen versehen, die dafür sorgen sollen, dass nur ein einziger, gewünschter Transponder an eine Anwendung, beispielsweise ein Steuerungsgerät für eine Automatisierungsaufgabe weitergemeldet wird. Solche Filter versuchen regelmäßig anhand von Empfangsparametern, beispielsweise anhand einer Funksignalstärke den der Anwendung und damit dem Schreib-/Lesegerät oder Lesegerät nächstliegenden der Transponder aus der Menge der empfangenen beziehungsweise ausgelesenen Transpondern auszuwählen beziehungsweise zu selektieren.

Neben den Überreichweiten treten als weiteres Problem häufig Reflexionen bei UHF-Applikationen auf. Wird zum Beispiel in einer Wäscherei an den Wäschestücken jeweils ein Transponder befestigt und diese Wäschestücke werden von Hand bewegt, beispielsweise in einen Erfassungsbereich eines Schreib-/Lesegerätes oder eines Lesegerätes gebracht, treten durch die Hände der Bedienpersonen Absorptionen und/oder Reflexionen auf.

Mögliche Maßnahmen zur Erhöhung der Lesesicherheit und zum Selektieren des nächstliegenden Transponders sind aus der Praxis bekannt, beispielsweise eine dynamische Anpassung der Sendeleistung, ein Signalschwellwert ("Threshold") für die erwartete Mindestsignalstärke ("RSSI") einer Transponderantwort, statistische Auswertungen über eine Lesehäufigkeit bei einer wiederholten Erfassung usw.. Diese Maßnahmen sind als Filterkriterien und Filteralgorithmen in bekannten RFID-Schreib-/Lesegeräten oder RFID-Lesegeräten umgesetzt, um von einer breit ausgelesenen "Transponderpopulation" den richtigen, also für die jeweilige Anwendung relevanten Transponder zu selektieren, wobei es sich meist - wie schon ausgeführt - um den nächstliegenden der Transponder handeln sollte.

Bei bestimmten Anwendungen ist es jedoch notwendig, mehr als einen Transponder zu identifizieren. Solche Anwendungen sind oben genannt. Eine derartige Anwendung kann beispielsweise eine Wäscherei sein, bei der Stapel von beispielsweise jeweils zehn T-Shirts ausgelesen werden sollen oder Wäschepakete, die beispielsweise aus einem Duschtuch, einem Handtuch und einem Bademantel bestehen.

Es kann dabei ungewollt vorkommen, dass aufgrund von Überreichweiten Transponder von anderen Waren (im vorliegenden Beispiel Wäschestücke) ausgelesen werden und es damit zu Fehlauslesungen kommt.

Aus dem Stand der Technik (DE 10 2012 212 856 B4) ist bekannt, dass die bekannten Algorithmen in der Regel nur für Anwendungen geeignet sind, die mit genau einer Identifizierungsnummer eines Transponders versorgt werden sollen (so genannte "Single-Tag-Anwendungen") oder aber für eine Anzahl der am besten empfangenen Transponder.

Sollen die genannten Algorithmen für Anwendungen genutzt werden, bei denen mehrere Transponder gleichzeitig ausgelesen, selektiert und gemeldet werden müssen, so genannte "Multi-Tag-Applikationen", entsteht das Problem, dass ein Algorithmus oft nicht entscheiden kann, ob die richtigen Transponder ausgelesen worden sind, beispielsweise der Transponder eines Werkstückes oder ein Transponder eines Werkstückträgers.

Gemäß diesem Stand der Technik wird vorgeschlagen, die Transponder jeweils in eine von zwei funktionalen Gruppen einzuteilen, wobei das Schreib-/Lesegerät dann zur Feststellung der jeweiligen Zugehörigkeit der ausgelesenen Transponder zu einer der Gruppen eingerichtet ist. Weiterhin ist bei diesem Stand der Technik vorgesehen, dass eine Filtereinrichtung vorhanden ist, die einen Transponder aus jeder der Gruppen selektieren kann. So kann zum Beispiel unterschieden werden, ob ein Transponder an einem Werkstück oder an einem Werkstückträger angeordnet ist und es kann nicht zu Fehlauslesungen dahingehend kommen, dass ein Werkstückträger als Werkstück erfasst wird und umgekehrt.

Dieses zum Stand der Technik gehörende Verfahren ist bei Einsatzgebieten anwendbar, bei dem die Transponder in verschiedene Gruppen eingeteilt werden können, da die zu markierenden Gegenstände oder Waren in verschiedene Gruppen eingeteilt werden können, wie zum Beispiel Werkstücke und Werkstückträger, auf denen die Werkstücke angeordnet werden. Dieses Verfahren ist nicht einsetzbar bei Gruppen von Waren oder Gegenständen, bei denen die Waren oder Gegenstände gleich ausgestaltet sind, wie zum Beispiel T-Shirts eines T-Shirt-Stapels in einer Wäscherei.

Ein RFID-System besteht aus einem so genannten Transponder, der am oder im Gegenstand oder an oder in der Ware angeordnet ist und einen kennzeichnenden Code enthält, sowie einem Lesegerät zum Auslesen dieser Kennung. Das Lesegerät kann auch als Schreib-/Lesegerät ausgebildet sein, wenn von dem Schreib-/Lesegerät Informationen oder Daten auf den Transponder übertragen werden sollen.

Die Übertragung der Informationen erfolgt in der Regel so, dass das Lesegerät (Reader) oder Schreib-/Lesegerät (im folgenden wird nur noch Schreib/-Lesegerät genannt, es kann sich jedoch auch nur um ein Lesegerät handeln, wenn nicht explizit Daten auf den Transponder übertragen werden sollen), ein hochfrequentes elektromagnetisches Wechselfeld erzeugt, dem der RFID-Transponder ausgesetzt wird. Die von dem Transponder über die Antenne aufgenommene Hochfrequenzenergie dient während des Kommunikationsvorganges als Stromversorgung für seinen Chip. Bei aktiven Transpondern kann die Energieversorgung auch durch eine eingebaute Batterie erfolgen. Bei halb-aktiven Transpondern übernimmt die Batterie lediglich die Versorgung des Mikrochips.

Der so aktivierte Mikrochip im RFID-Transponder decodiert die vom Schreib-/Lesegerät oder vom Lesegerät gesendeten Befehle. Die Antwort codiert und moduliert der RFID-Transponder in das eingestrahlte elektromagnetische Feld durch Feldschwächung im kontaktfreien Kurzschluss oder gegenphasige Reflexion des vom Schreib-/Lesegerät oder vom Lesegerät ausgesendeten Feldes. Damit überträgt der Transponder seine Seriennummer (UID), weitere Daten des gekennzeichneten Objekts oder andere vom Schreib-/Lesegerät oder Lesegerät abgefragte Informationen. Der Transponder erzeugt selbst also kein Feld, sondern beeinflusst das elektromagnetische Sendefeld des Schreib-/Lesegerätes oder des Lesegerätes.

Die RFID-Transponder arbeiten je nach Typ im Bereich der Langwelle bei 125 kHz, 134 kHz, 250 kHz, der Mittelwelle bei 375 kHz, 500 kHz, 625 kHz, 750 kHz, 875 kHz, der Kurzwelle (HF) bei 13,56 MHz, der UHF bei 865 - 868 MHz oder 915 - 921 MHz europäische Frequenzen) bzw. 902 - 928 MHz (US-amerikanische und asiatische Frequenzbänder) oder der SHF bei 2,45 GHz und 5,8 GHz. Die freigegebenen Frequenzen für LF- und UHF-Transponders unterscheiden sich regional für Asien, Europa und Amerika und sind von der ITU koordiniert.

HF-Transponder verwenden Lastmodulation, das heißt, sie verbrauchen durch Kurzschließen einen Teil der Energie des magnetischen Wechselfeldes. Dies kann das Schreib-/ Lesegerät oder das Lesegerät, theoretisch aber auch ein weiter entfernter Empfänger, detektieren. Die Antennen eines HF-Transponders bilden eine Induktionsspule mit mehreren Windungen.

UHF-Transponder hingegen arbeiten meistens im elektromagnetischen Fernfeld zum Übermitteln der Antwort. Dieses Verfahren wird auch modulierte Rückstreuung genannt. Die Antennen sind meist lineare, gefaltete oder spiralige Dipole, der Chip sitzt in der Mitte zwischen den linearen oder mehrfach gewinkelten Dipolarmen des RFID-Transponders.

Damit ein Transponder sowohl horizontal als auch vertikal gelesen werden kann, wird, wie aus der Praxis bekannt, eine zirkulare Polarisation verwendet. Diese reduziert zwar das Signal-Rausch-Verhältnis, dafür ist irrelevant, in welcher Orientierung der Transponder relativ zu der Antenne ausgerichtet ist. Da Wasser die UHF-Energie sehr stark absorbiert und Metall diese elektromagnetischen Wellen sehr stark reflektiert, beeinflussen diese Materialien die Ausbreitung der Antennenfelder. Weiterhin verstimmen dielektrische Untergrundmaterialien die Resonanzfrequenz der Antennen. Daher ist es notwendig, UHF-Transponder möglichst genau auf die Materialien der gekennzeichneten Objekte abzustimmen oder die Transponder mit einer vom Untergrund abschirmenden Metallfolie auszustatten.

Das korrekte Auslesen von Transpondern kann von einer Vielzahl von Fehlerfällen gemindert werden. Beispielsweise können Transponder ausgelesen werden, die sich wenige Zentimeter außerhalb eines Erfassungsbereiches eines Schreib-/ Lesegerätes oder Lesegerätes befinden, die jedoch nicht bei einer Messung ausgelesen werden sollen.

Als Beispiel ist hierfür die Anwendung in einer Wäscherei genannt. Hier sollen beispielsweise Stapel von T-Shirts erfasst werden. Jedes T-Shirt ist mit einem Transponder versehen. Beispielsweise bei der Ausbuchung der Waren sollen Stapel von z.B. zehn T-Shirts erfasst werden. Diese werden in den Erfassungsbereich des Schreib-/Lesegerätes oder des Lesegerätes gebracht. Dabei werden die zehn entsprechenden Transponder ausgelesen. Gleichzeitig könnten jedoch auch Transponder eines weiteren, neben dem Schreib-/ Lesegerät oder dem Lesegerät angeordneten Stapels von T-Shirts fälschlicherweise ausgelesen werden. Diese Fehlauslesungen sind natürlich unerwünscht.

Aus der Praxis ist bekannt, Schreib-/Lesegeräte oder Lesegeräte zu verwenden, die ein hochfrequentes elektromagnetisches Wechselfeld erzeugen. Dieses Wechselfeld wird entweder über einen Startknopf angeschaltet und über denselben oder einen anderen Betätigungsknopf abgeschaltet oder es ist ein optischer Sensor vorhanden, der erfasst, dass Waren mit Transpondern innerhalb der Funkreichweite des Schreib-/Lesegerätes oder des Lesegerätes angeordnet sind. Diese aus der Praxis bekannten Vorrichtungen weisen jedoch den Nachteil auf, dass entweder das hochfrequente elektromagnetische Wechselfeld zuverlässig und über die gesamte Dauer des Lese- und Datenverarbeitungszyklus mittels des Startknopfes angeschaltet werden muss. Oder es ist erforderlich, einen optischen Sensor vorzusehen, wodurch die Vorrichtung jedoch deutlich aufwendiger wird. Der optische Sensor benötigt darüber hinaus eine extra Hardware, wodurch diese Vorrichtungen teurer werden.

Zum Stand der Technik (EP 2 560 125 A1) gehört ein Verfahren und ein Schreib-/Lesegerät für eine Anordnung mit einer Mehrzahl berührungslos auslesbarer Transponder. Gemäß diesem Stand der Technik wird lediglich ein einziger Transponder, nämlich der räumlich nächstliegende Transponder erfasst. Die restlichen Transponder, die sich alle im maximalen Sende-/Empfangsradius des Schreib-/Lesegerätes befinden, sollen nicht erfasst werden. Dieses Verfahren ist nicht dazu geeignet, eine Anzahl von Transpondern aus einer Vielzahl dieser Transponder zu erfassen, zu selektieren und zu melden.

Weiterhin gehört zum Stand der Technik (EP 2 990 989 A1) ein Verfahren und ein Schreib-/Lesegerät zur Selektion eines drahtlosen Datenträgers. Gemäß diesem Stand der Technik werden mehrere Erfassungszyklen durchgeführt mit jeweils unterschiedlicher Antennenpolarisationen. Durch diese unterschiedlichen Antennenpolarisationen wird eine höhere Varianz der Empfangsfeldstärke beispielsweise der erforderlichen Sendefeldstärke erzielt. Es werden diejenigen Datenträger selektiert, der oder die mit der höchsten Anzahl verschiedener Antennenpolarisationen erfassbar ist oder sind. Damit ergibt sich eine Auswertung, bei der keine Schwellwerte (beispielsweise für einen RSSI-Wert) definiert werden, sondern die Unterscheidung zwischen "lesbar" und "nicht lesbar" reicht dafür aus. Die Antennen werden hinsichtlich ihres Strahlungsverhaltens zwischen horizontaler, vertikaler, rechts-zirkularer und links-zirkularer Polarisation umgeschaltet. Dieses Verfahren weist den Nachteil auf, dass eine Vielzahl von Erfassungszyklen mit jeweils unterschiedlichen Antennenpolarisationen durchgeführt werden müssen, was zeitaufwändig ist.

Das der Erfindung zugrundeliegende technische Problem besteht darin, ein Verfahren zum Auslesen, zur Selektion und Meldung einer Anzahl aus einer Vielzahl von berührungslos auslesbaren Transpondern an eine Auswerteeinheit sowie eine Vorrichtung zum Auslesen, zur Selektion und Meldung einer Anzahl aus einer Vielzahl von berührungslos auslesbaren Transpondern an eine Auswerteeinheit anzugeben, welche zuverlässig sind und Fehlauslesungen von nicht auszulesenden Transpondern vermeiden. Darüber hinaus soll ein Kalibrierverfahren zur Kalibrierung eines Schreib-/Lesegerätes oder eines Lesegerätes, welches in einer erfindungsgemäßen Vorrichtung angeordnet ist, angegeben werden, welches eine zuverlässige Kalibrierung des Schreib-/Lesegerätes oder des Lesegerätes erlaubt.

Dieses technische Problem wird durch ein Verfahren mit den Merkmalen gemäß Anspruch 1 sowie durch eine Vorrichtung mit den Merkmalen gemäß Anspruch 15 gelöst.

Das erfindungsgemäße Verfahren zur Erfassung, Selektion und Meldung einer Anzahl aus einer Vielzahl von berührungslos auslesbaren Transpondern an eine Auswerteeinheit,

- wobei das Verfahren mit wenigstens einem Schreib-/Lesegerät oder Lesegerät durchgeführt wird,
- wobei das Schreib-/Lesegerät oder das Lesegerät ein hochfrequentes elektromagnetisches Wechselfeld erzeugt und über eine Sende-/Empfangsantenne abstrahlt,
- wobei das Schreib-/Lesegerät oder das Lesegerät Daten des oder der innerhalb einer Funkreichweite befindlichen Transponder mittels zumindest eines Lesezyklus ausliest und wenigstens ein Datenverarbeitungszyklus durchgeführt wird,
- wobei das Schreib-/Lesegerät oder das Lesegerät mit einer Filtereinrichtung wenigstens einen der ausgelesenen Transponder selektiert,
- wobei das Schreib-/Lesegerät oder das Lesegerät den oder die selektierten Transponder an die Auswerteeinheit meldet,

zeichnet sich dadurch aus,

- dass ein kontinuierliches Auslesen der Daten der Transponder erfolgt,
- dass, wenn ein Transponder (19 bis 29) innerhalb der Funkreichweite des Schreib-/Lesegerätes (14) oder des Lesegerätes angeordnet wird, ein RSSI-Wert dieses Transponders (19 bis 29) erfasst wird,
- dass ein erster Signalschwellwert (Startwert) verwendet wird,
- dass bei Erreichen oder Überschreiten des ersten Signalschwellwertes (Startwertes) durch einen Transponder der Lese- und Datenverarbeitungszyklus der Daten des oder der Transponder gestartet wird, das heißt, wenn der RSSI-Wert, Received Signal Strength Indicator des oder der Transponder, die in dem Erfassungsbereich des Schreib-/Lesegerätes oder des Lesegerätes angeordnet sind, größer ist als der erste Signalschwellwert oder gleich dem ersten Signalschwellwert ist, der Lese- und Datenverarbeitungszyklus gestartet wird,
- dass ein zweiter Signalschwellwert (Filterwert) verwendet wird zum Herausfiltern von zu ignorierenden Transpondern,
- dass die Signalschwellwerte als RSSI-Werte ausgebildet sind,
- dass der Lese- und Datenverarbeitungszyklus beendet wird,
- dass ausgewertete Daten der Transponder an die Auswerteeinheit übermittelt werden,
- dass nach einer Übermittlung der ausgewerteten Daten der Transponder an die Auswerteeinheit die Daten der Transponder ignoriert oder gelöscht werden.

Das erfindungsgemäße Verfahren weist mehrere Besonderheiten auf.

Die erste Besonderheit liegt darin, dass das Auslesen der Transponder kontinuierlich erfolgt. Das bedeutet, dass das hochfrequente elektromagnetische Wechselfeld erzeugt wird, und dass jederzeit Transponder, die in den Funkbereich (im folgenden Funkreichweite genannt) dieses Wechselfeldes gebracht werden, ausgelesen werden. Die Erzeugung des hochfrequenten elektromagnetischen Wechselfeldes wird also nicht durch Betätigen eines Startknopfes oder über ein Signal eines optischen Sensors gestartet oder beendet. Der Lese- und Datenverarbeitungszyklus wird gestartet, wenn der erste Signalschwellwert (Startwert) erreicht oder überschritten wird, das heißt, wenn ein Transponder in den Erfassungsbereich gelangt und der RSSI-Wert dieses Transponders größer als der erste Signalschwellwert ist oder gleich dem ersten Signalschwellwert ist. Mit dem Start des Lese- und Datenverarbeitungszyklus werden die Daten der in dem Erfassungsbereich befindlichen Transponder ausgelesen und die Daten werden verwertet.

Die ausgelesenen Daten der Transponder werden vorteilhaft in einem Speichermedium, beispielsweise einem nicht-flüchtigen Speicher oder einem Arbeitsspeicher abgespeichert. Der Speicher ist vorteilhaft in dem Schreib-/Lesegerät oder dem Lesegerät angeordnet.

Die zweite Besonderheit des erfindungsgemäßen Verfahrens ist, dass, wenn ein Transponder innerhalb der Funkreichweite des Schreib-/Lesegerätes oder des Lesegerätes angeordnet wird, ein RSSI-Wert dieses Transponders erfasst wird. Der Lese- und Datenverarbeitungszyklus wird jedoch erst gestartet bei Erreichen oder Überschreiten des ersten Signalschwellwertes (Startwert). Das heißt, wenn der RSSI-Wert des oder der Transponder, die in dem Erfassungsbereich des Schreib-/Lesegerätes oder des Lesegerätes angeordnet sind, größer ist als der erste Signalschwert oder gleich dem ersten Signalschwellwert ist, wird der Lese- und Datenverarbeitungszyklus gestartet.

Die dritte Besonderheit ist, dass darüber hinaus ein zweiter Signalschwellwert (Filterwert) verwendet wird zum Herausfiltern von zu ignorierenden Transpondern.

Der zweite Signalschwellwert gewährleistet, dass Transponder, die einen niedrigeren RSSI-Wert als der zweite Signalschwellwert aufweisen, herausgefiltert werden, so dass sie nicht ausgelesen, selektiert und gemeldet werden.

Eine vierte Besonderheit der vorliegenden Erfindung besteht darin, dass der Lese- und Datenverarbeitungszyklus unabhängig von einer Bedienperson beendet wird.

Gemäß einer vorteilhaften Ausführungsform der Erfindung ist vorgesehen, dass der Lese- und Datenverarbeitungszyklus beendet wird

- nach einer vorbestimmten Zeit oder
- bei Unterschreiten eines dritten Signalschwellwertes oder
- wenn ein Transponder mit dem kleinsten RSSI-Wert sämtlicher in dem Lese- und Datenverarbeitungszyklus ausgelesenen Transponder wenigstens zwei Mal gelesen wurde.

Es können auch andere Abbruchkriterien vorgesehen sein. Die genannten sind jedoch besonders vorteilhaft.

Ein weiteres Abbruchkriterium könnte beispielsweise sein, dass mindestens eine vorgegebene Anzahl von Transpondern gelesen wird.

Bei der ersten Möglichkeit, bei der der Lese- und Datenverarbeitungszyklus nach einer vorbestimmten Zeit beendet wird, wird diese Zeitspanne vorgegeben, beispielsweise bei einer Kalibrierung. Diese Zeitspanne kann je nach Anwendung variiert werden.

Das Schreib-/Lesegerät oder Lesegerät benötigt beispielsweise für die Messung von bis zu 25 Transpondern eine Sekunde. Aus diesem Grunde kann davon ausgegangen werden, dass beispielsweise innerhalb von zwei Sekunden die erforderliche Anzahl von Transpondern erfasst wird. Der Lese- und Datenverarbeitungszyklus wird deshalb nach einer vorbestimmten Zeit beendet, so dass keine Fehlmessungen erfolgen können.

Das Beenden des Lese- und Datenverarbeitungszyklus beinhaltet jedoch nicht, dass das Auslesen von Transpondern unterbrochen wird. Transponder, die sich in der Funkreichweite des Schreib-/Lesegerätes oder des Lesegerätes befinden, werden weiterhin ausgelesen, jedoch werden die Daten dieser Transponder nicht weiterverarbeitet oder verwertet. Dieser Vorgang wird als Lesezyklus - in Abgrenzung zum Lese- und Datenverarbeitungszyklus - bezeichnet.

Gemäß der zweiten Möglichkeit kann der Lese- und Datenverarbeitungszyklus auch bei Unterschreiten eines dritten Signalschwellwertes beendet werden.

Sind beispielsweise keine Transponder mehr innerhalb des Erfassungsbereiches des Schreib-/Lesegerätes oder des Lesegerätes angeordnet, ist der RSSI-Wert entsprechend gering und der Lese- und Datenverarbeitungszyklus kann beendet werden.

Gemäß der dritten Möglichkeit wird der Lese- und Datenverarbeitungszyklus beendet, wenn der Transponder mit dem kleinsten RSSI-Wert sämtlicher in dem Lese- und Datenverarbeitungszyklus ausgelesenen Transponder wenigstens zwei Mal gelesen wurde. Bevorzugt werden die Transponder zwei oder drei Mal ausgelesen.

Innerhalb eines Lese- und Datenverarbeitungszyklus werden die in dem Erfassungsbereich befindlichen Transponder mehrmals gelesen. Wenn der Transponder mit dem kleinsten RSSI-Wert beispielsweise zwei oder drei Mal gelesen wurde, kann davon ausgegangen werden, dass sämtliche sich im Erfassungsbereich des Schreib-/Lesegerätes oder des Lesegerätes angeordneten Transponder gelesen wurden. Der Lese- und Datenverarbeitungszyklus kann dann beendet werden.

Gemäß einer vorteilhaften Ausführungsform des erfindungsgemäßen Verfahrens werden nach dem Beenden des Lese- und Datenverarbeitungszyklus oder beim Starten des Lese- und Datenverarbeitungszyklus sämtliche vorhergehenden ausgewerteten Daten der Transponder ignoriert oder gelöscht.

Das bedeutet, dass bei Erreichen oder Überschreiten des ersten Signalschwellwertes (Startwertes) der Lese- und Datenverarbeitungszyklus gestartet wird. Sämtliche vorher ausgewerteten Daten von Transpondern, die bis dahin ausgelesen und verarbeitet wurden, werden aus einem Speichermedium gelöscht oder die Daten werden ignoriert.

Die ausgelesenen Daten der Transponder werden auch innerhalb des Lesezyklus gelöscht, wenn die Prüfung, ob ein Startwert erreicht oder überschritten wird, negativ ist. In diesem Fall werden sämtliche bis dahin ausgelesenen Transponderdaten ebenfalls gelöscht.

Die Daten der Transponder können in einem Arbeitsspeicher des Schreib-/Lesegerätes zwischengespeichert werden und anschließend in einem dauerhaften Speicher, beispielsweise einem Computer abgespeichert werden. Sie werden vor oder nach dem Beenden eines Lese- und Datenverarbeitungszyklus aus einem Arbeitsspeicher des Schreib-/Lesegerätes gelöscht.

Alle ausgewerteten Daten der Transponder werden nach Beenden eines Lese- und Datenverarbeitungszyklus ignoriert oder gelöscht. Die Erfassung von Transpondern läuft jedoch weiter (Lesezyklus). Es werden lediglich die in dem vorhergehenden Lese- und Datenverarbeitungszyklus ausgelesenen Daten verworfen. Gelangen neue Transponder in den Erfassungsbereich und es wird der erste Signalschwellwert erreicht oder überschritten, wird ein neuer Lese- und Datenverarbeitungszyklus gestartet. Die Erfassung eines RSSI-Wertes eines Transponders, der größer ist als der erste Signalschwellwert (Startwert) ist hierbei der Trigger.

Hierdurch werden Fehlerfassungen von Transpondern, beispielsweise aufgrund von Reflexionen vermieden.

Funkreichweite eines Schreib-/Lesegerätes ist der Bereich, in dem Transponder von dem Schreib-/Lesegerät ausgelesen werden. Bei dem Auslesen empfangen Transponder ein Sendesignal des Schreib-/Lesegerätes und das Schreib-/Lesegerät erhält eine gültige Antwort von den Transpondern.

Erfassungsbereich eines Schreib-/Lesegerätes ist der Bereich der Funkreichweite, in dem die Transponder, die in diesem Bereich angeordnet sind, von dem Schreib-/Lesegerät ausgelesen werden sollen und deren Daten weiterverarbeitet werden. Daten von Transpondern, die sich außerhalb des Erfassungsbereiches befinden, werden verworfen.

Die im Erfassungsbereich des Schreib-/Lesegerätes angeordneten Transponder sollen zuverlässig ausgelesen werden.

Die Transponder werden kontinuierlich von dem Schreib-/Lesegerät ausgelesen. Es wird lediglich über die Signalschwellwerte festgelegt, ob ein Lese- und Datenverarbeitungszyklus gestartet wird und die Daten der gültigen Transponder während des Lese- und Datenverarbeitungszyklus ausgelesen werden.

Während des Lese- und Datenverarbeitungszyklus, und nur dann, werden die Daten der gültigen Transponder ausgelesen und die Daten werden verarbeitet. Diese Daten können beispielsweise in einem Speichermedium oder Datenspeicher, auch dauerhaft abgespeichert werden.

Daten der Transponder sind Daten zur Identifizierung der Transponder. Daten können zum Beispiel die Identifizierungsnummern der Transponder sein. Der RSSI-Wert fällt nicht unter den Begriff Daten.

Der Begriff Schreib-/Lesegerät umfasst im Folgenden auch die Ausführungsform eines Lesegerätes, ohne dass das Lesegerät im Folgenden jedes Mal explizit genannt wird.

Ein Schreib-/Lesegerät kann eine oder mehrere Sende-Empfangsantennen oder eine oder mehrere Sendeantennen und eine oder mehrere Empfangsantennen aufweisen. Eine Sende-/ und Empfangsantenne ist eine Antenne, die senden und empfangen kann. Es besteht jedoch auch die Möglichkeit, dass das Schreib-/Lesegerät Antennen aufweist, die entweder senden oder empfangen.

Gemäß einer vorteilhaften Ausführungsform der Erfindung ist vorgesehen, dass der erste oder der zweite oder der dritte Signalschwellwert als RSSI-Wert (Received Signal Strenght Indicator) verwendet wird. Der Received Signal Strenght Indicator (RSSI) stellt einen Indikator für die Empfangsfeldstärke kabelloser Kommunikationsanwendungen dar.

Das Schreib-/Lesegerät oder das Lesegerät umfasst vorteilhaft einen integrierten Empfangssignalstärke-Indikator (RSSI) für die von den Transpondern empfangenen Signale. Der Empfangssignalstärkeindikator erfasst für die Werte I und Q, nämlich die In-Phase und Quadratur-Phase eines komplexen Signales oder auch Vektorsignales, den Real- und Imaginärteil. Hierdurch ist es möglich, den Leistungspegel eines ankommenden Transpondersignales oder einer Transponderantwort zu messen. Die empfangenen Signale (I, Q) können beispielsweise auf zwei 4-Bit logarithmische A/D-Wandler geleitet werden. Die beiden erfassten logarithmischen Absolutwerte sind proportional zur Eingangsleistung an Mischereingangsports. Das Verhältnis zwischen den I- und Q-Werten ergibt die Phasenbeziehung zwischen der Lokaloszillator-(VCO)-Phase und der Eingangssignalphase.

Die Verwendung des RSSI-Wertes weist den Vorteil auf, dass die Empfangsfeldstärke der einzelnen Transponder erfasst werden kann. Es kann hierbei erfasst werden, ob ein Transponder einen RSSI-Wert aufweist der größer oder kleiner als ein Signalschwellwert ist.

Ist der Transponder in unmittelbarer Nähe der Antenne angeordnet und der RSSI-Wert ist größer als der erste Signalschwellwert (Startwert) oder der RSSI-Wert ist gleich dem ersten Signalschwellwert, wird der Lese- und Datenverarbeitungszyklus gestartet.

Ist der RSSI-Wert eines Transponders kleiner als der zweite Signalschwellwert (Filterwert), wird dieser Transponder herausgefiltert, da es sich hierbei um einen Transponder handelt, der sich außerhalb des Erfassungsbereiches befindet und deshalb nicht gelesen werden soll. Es kann auch vorgesehen sein, dass der Transponder herausgefiltert wird, wenn der RSSI-Wert des Transponders gleich dem zweiten Schwellwert (Filterwert) ist.

Überschreiten des Signalschwellwertes bedeutet, dass der RSSI-Wert eines Transponders oder der größte RSSI-Wert von wenigstens zwei Transpondern größer ist als der Signalschwellwert.

Erreichen des Signalschwellwertes bedeutet, dass der RSSI-Wert eines Transponders oder der größte RSSI-Wert von wenigstens zwei Transpondern dem Signalschwellwert entspricht.

Unterschreiten des Signalschwellwertes bedeutet, dass der RSSI-Wert eines oder mehrerer Transponder kleiner ist als der Signalschwellwert.

Gemäß einer vorteilhaften Ausführungsform der Erfindung werden die Daten der Transponder in einem Speichermedium abgespeichert oder zwischengespeichert.

Vor dem Start des Lese- und Datenverarbeitungszyklus werden die Daten der Transponder zwar in dem Lesezyklus ausgelesen. Diese Daten werden jedoch nicht verwertet. Das Schreib-/Lesegerät erfasst zwar, dass sich Transponder innerhalb der Funkreichweite befinden. Der RSSI-Wert dieser Transponder, der abhängig von der Entfernung zu der wenigstens einen Sende-/Empfangsantenne ist, ist jedoch kleiner als der erste Signalschwellwert (Startwert), so dass der Lese- und Datenverarbeitungszyklus nicht gestartet wird. Der RSSI-Wert ist auch kleiner als der zweite Signalschwellwert (Filterwert), so dass dieser Transponder zwar von dem Schreib-/Lesegerät ausgelesen wird, die Daten jedoch ignoriert werden.

Vorteilhaft werden Daten von Transpondern, die während eines Lese- und Datenverarbeitungszyklus schon gelesen wurden, wenn sie noch einmal ausgelesen werden, nicht mehr in den Speicher, beispielsweise Arbeitsspeicher geschrieben. Es wird während eines Lese- und Datenverarbeitungszyklus eine Prüfung vorgenommen, ob die Daten der einzeln ausgelesenen Transponder schon in dem Speicher vorhanden sind.

Gemäß einer vorteilhaften Ausführungsform des erfindungsgemäßen Verfahrens ist vorgesehen, dass vor dem Lese- und Datenverarbeitungszyklus wenigsten ein Lesezyklus durchgeführt wird, dass während des Lesezyklus die Daten der in einem Erfassungsbereich des Schreib-/Lesegerätes oder des Lesegerätes angeordneten Transponder ausgelesen werden, dass geprüft wird, ob der Startwert überschritten wird und dass bei Unterschreiten des Startwertes die Daten der Transponder gelöscht werden und der Lesezyklus erneut gestartet wird.

Hierdurch ist gewährleistet, dass Transponderdaten, die schon erfasst wurden, jedoch nicht verarbeitet wurden, weil der Startwert nicht erreicht oder überschritten wurde, gelöscht werden und in die folgenden Erfassungen nicht mehr mit einfließen.

Eine weitere vorteilhafte Ausführungsform der Erfindung sieht vor, dass die Transponder mindestens ein Mal pro Lesezyklus und/oder mindestens ein Mal pro Lese- und Datenverarbeitungszyklus in einen Grundzustand zurückgesetzt werden.

Es sind aus der Praxis verschiedene Transponder mit verschiedenen Modi bekannt. Hierzu gehören zum Beispiel:

1. Transponder, die in ein hochfrequentes elektromagnetisches Wechselfeld gelangen, werden gelesen und es wird ein so genanntes Bit gesetzt. Das heißt, sie werden als gelesen markiert. Diese Markierung bleibt für eine vorbestimmte Zeitspanne, die länger als die Zeitspanne eines Lese- und Datenverarbeitungszyklus ist, erhalten. Beispielsweise kann die Zeitspanne länger als fünf Sekunden sein. Die Markierung bleibt gesetzt, unabhängig davon, ob die Transponder zwischenzeitlich außerhalb eines elektromagnetischen Feldes angeordnet sind oder nicht.

2. Es gibt Transponder, die nach einer kurzen Zeit, die kürzer als die Zeitspanne eines Lese- und Datenverarbeitungszyklus ist, wieder in den Zustand "ungelesen" automatisch zurückfallen. Diese Transponder können während eines Lese- und Datenverarbeitungszyklus erneut gelesen werden. Eine derartige Zeitspanne beträgt zum Beispiel 0,5 Sekunden.

3. Bei der dritten Variante bleibt das Bit gesetzt, also der Zustand "gelesen" so lange bestehen, so lange diese Transponder sich innerhalb eines hochfrequenten elektromagnetischen Wechselfeldes befinden. Das bedeutet, dass durch kurzzeitiges Abschalten des Wechselfeldes diese Transponder zurückgesetzt werden können in den Zustand "ungelesen" .

Gemäß einer vorteilhaften Ausführungsform ist es vorgesehen, die Transponder während eines Lese- und Datenverarbeitungszyklus wenigstens ein Mal in den Grundzustand, das heißt in einen Zustand mit der Markierung "ungelesen" zurückzusetzen, damit die Transponder noch einmal ausgelesen werden können. So werden Fehlerfassungen oder Nichterfassungen von Transpondern vermindert oder vermieden.

Gemäß einer weiteren vorteilhaften Ausführungsform der Erfindung werden die Transponder in einen Grundzustand zurücksetzt durch

- Senden eines Protokolls an die Transponder oder
- durch Ablauf einer vorbestimmten Zeitspanne oder
- durch Ausschalten des hochfrequenten elektromagnetischen Wechselfeldes.

Durch Senden eines entsprechenden Protokolls von dem Schreib-/Lesegerät an den oder die Transponder können der oder die Transponder zurückgesetzt werden.

Es ist alternativ möglich, wie oben schon beschrieben, dass ein Transponder automatisch nach einer vorbestimmten Zeitspanne, die kürzer als die Zeitspanne eines Lese- und Datenverarbeitungszyklus ist, beispielsweise 0,5 Sekunden, in den Grundzustand mit der Markierung "ungelesen" zurückfällt.

Eine weitere Alternative besteht darin, das hochfrequente elektromagnetische Wechselfeld kurzzeitig abzuschalten. Hierdurch können die Transponder ebenfalls in den Grundzustand zurückgesetzt werden.

Werden die Transponder zurückgesetzt und erneut gelesen, wird verglichen, ob die Daten der erneut gelesenen Transponder schon im Datenspeicher abgespeichert sind. Sind die Daten schon im Datenspeicher abgespeichert, werden sie nicht erneut abgespeichert.

Bei dem Datenspeicher handelt es sich vorteilhaft um einen elektronischen Datenspeicher. Es kann sich um einen nicht-flüchtigen elektronischen Datenspeicher handeln.

Gemäß einer weiteren vorteilhaften Ausführungsform des erfindungsgemäßen Verfahrens ist die Hochfrequenzleistung einstellbar. Besonders vorteilhaft ist die Hochfrequenzleistung zwischen 10 mW und 500 mW einstellbar.

Die Einstellung kann beispielsweise in 10 mW-Schritten, 25 mW-Schritten oder 50 mW-Schritten erfolgen. Vorteilhaft sind die Schritte jedoch kleiner als jeweils 50 mW. Andere Schrittweiten sind auch möglich. Die Leistung wird vorteilhaft so eingestellt, dass gerade noch alle Transponder im Erfassungsbereich ausgelesen werden können. Eine fast stufenlose Einstellung wäre optimal. Die kleine Leistung zwischen 10 und 500 mW ist vorteilhaft, um Reflexionen gering zu halten.

Eine weitere vorteilhafte Ausführungsform der Erfindung sieht vor, dass ein Lese- und Datenverarbeitungszyklus eine Zeitspanne von maximal fünf Sekunden aufweist. Eine Zeitspanne von maximal zwei Sekunden ist vorteilhaft. Kürzere Zeitspannen sind möglich in Abhängigkeit von der Anzahl der zu erfassenden Transponder.

Das Beschränken des Lese- und Datenverarbeitungszyklus auf eine vorbestimmte Zeitspanne weist den Vorteil auf, dass in dieser Zeitspanne sämtliche Transponder gelesen werden können, dass anschließend jedoch weitere Transponder nicht mehr ausgelesen werden und hierdurch Fehlerfassungen vermieden werden.

Bei den gängigen Anwendungen von Messungen von beispielsweise bis 200 Transpondern ist die Beschränkung der Messzeit auf maximal fünf Sekunden besonders vorteilhaft. Hierdurch dauert der Messvorgang nicht zu lange, so dass ein zügiges Arbeiten möglich ist. Andererseits ist die Messzeit nicht zu kurz, so dass alle zu erfassenden Transponder auch zuverlässig ausgelesen werden. In dieser Zeitspanne können auch Daten aus den Transpondern ausgelesen werden, falls erforderlich.

Eine weitere vorteilhafte Ausführungsform des erfindungsgemäßen Verfahrens sieht vor, dass der RSSI-Wert eines Transponders zwischen -90 dBm bis -20 dBm (Dezibel bezogen auf 1 Milliwatt) liegt und dass Transponder, die bei ein und derselben Messung ausgelesen werden und die RSSI-Werte aufweisen, die um Werte von vorteilhaft weniger als 6 dB (Dezibel) voneinander abweichen, mehrmals gemessen werden.

Das mehrmalige Lesen der Transponder, wenn die RSSI-Werte vorteilhaft weniger als 6 dB voneinander abweichen, weist den Vorteil auf, dass Fehlmessungen reduziert werden.

Das erfindungsgemäße Verfahren sieht vorteilhaft vor, dass wenigstens ein erster Transponder innerhalb des Erfassungsbereiches des Schreib-/Lesegerätes oder des Lesegerätes angeordnet wird, dass der RSSI-Wert dieses ersten Transponders erfasst wird, dass geprüft wird, ob der RSSI-Wert größer als der erste Signalschwellwert (Startwert) oder gleich dem ersten Signalschwellwert (Startwert) ist, und dass die Verarbeitung (Lese- und Datenverarbeitungszyklus) der Daten weiterer Transponder gestartet wird, wenn der RSSI-Wert des wenigstens einen ersten Transponders größer als der erste Signalschwellwert (Startwert) oder gleich dem ersten Signalschwellwert ist. Im vorliegenden Fall ist $n \geq 1$.

Wenn Transponder in den Erfassungsbereich des Schreib-/Lesegerätes oder Lesegerätes gebracht werden, werden Daten der Transponder ausgelesen. Dies können beispielsweise Nummernbereiche UID/EPC sein. UID bedeutet Unique Identifier. Es handelt sich hierbei um die Seriennummer des Transponders. EPC bedeutet electronic product code.

Während des Lese- und Datenverarbeitungszyklus können weitere Daten der Transponder ausgelesen werden, beispielsweise produktbezogene Daten.

Im Falle des Beispieles mit den T-Shirts können die produktbezogenen Daten Artikelnummern, Daten der Reinigung, die Größe der T-Shirts oder dergleichen sein.

In dem ersten Signalschwellwert (Startwert) kann eine Toleranz x enthalten sein. Es kann auch von dem ersten Signalschwellwert eine Toleranz subtrahiert werden. Es kann jedoch auch ohne eine Toleranz gearbeitet werden.

Auch in dem zweiten Signalschwellwert (Filterwert) kann eine Toleranz y enthalten sein. Es kann auch von dem zweiten Signalschwellwert eine Toleranz abgezogen werden. Es kann auch ohne eine Toleranz gearbeitet werden.

Gemäß einer vorteilhaften weiteren Ausführungsform, wird eine Anzahl n von auszulesenden Transpondern festgelegt, die RSSI-Werte der einzelnen Transponder werden ermittelt und die Daten der n Transponder mit den größten RSSI-Werten werden weiterverarbeitet.

Sind n Transponder oder weniger als n Transponder in der Funkreichweite angeordnet, werden die Daten sämtlicher Transponder weiterverarbeitet.

Gemäß dieser Ausführungsform werden Transponder, die sich zwar in der Funkreichweite, jedoch nicht im Erfassungsbereich des Schreib-/Lesegerätes befinden, gelesen. Sie werden jedoch herausgefiltert, so dass ihre Daten nicht verwertet werden.

Befindet sich ein Transponder außerhalb des Erfassungsbereiches, ist sein RSSI-Wert in der Regel kleiner als der RSSI-Wert eines Transponders, der sich innerhalb des Erfassungsbereiches befindet.

Eine weitere vorteilhafte Ausführungsform der Erfindung sieht vor, dass das Schreib-/Lesegerät oder das Lesegerät wenigstens zwei Sende-/Empfangsantennen oder wenigstens eine Sende- und wenigstens eine Empfangsantenne aufweist, und dass die Verfahrensschritte des Anspruches 1 für jede Antenne durchgeführt wird.

Häufig werden mehr als eine Antenne in einem Schreib-/ Lesegerät angeordnet, um beispielsweise Leselöcher durch Interferenzen auszugleichen. In diesem Fall ist es vorteilhaft, wenn das Verfahren zur Erfassung und Selektion von Transpondern mit jeder Antenne durchgeführt wird.

Eine weitere vorteilhafte Ausführungsform der Erfindung sieht vor, dass verschiedene Profile für verschiedene Applikationen vordefiniert werden. Beispielsweise kann ein Profil hinterlegt sein, bei dem die Leistung des hochfrequenten elektromagnetischen Wechselfeldes für bestimmte Transponder eines bestimmten Herstellers anhand der Angabe des Transpondertyps ausgewählt werden kann. Hierbei kann in dem Profil darüber hinaus beispielsweise hinterlegt werden, dass jeweils zehn Transponder zu erfassen sind. Auch andere Merkmale der Messung können in dem Profil hinterlegt werden.

In den Profilen können auch der erste Signalschwellwert (Startwert) und/oder der zweite Signalschwellwert (Filterwert) und/oder der dritte Signalschwellwert (Stoppwert) und/oder Einstellungen des hochfrequenten Wechselfeldes und/oder andere Werte festgelegt werden.

Diese Profile können vom Benutzer passend zu den jeweiligen Transpondertypen, zur Anwendung und/oder Umgebung abgerufen werden.

Ein Verfahren zur Kalibrierung eines Schreib-/Lesegerätes oder eines Lesegerätes zum Auslesen, zur Selektion und Meldung einer Anzahl aus einer Vielzahl von berührungslos auslesbaren Transpondern an eine Auswerteeinheit zeichnet sich dadurch aus, dass wenigstens ein Mal vor der Durchführung des erfindungsgemäßen Verfahrens eine Referenzmessung durchgeführt wird, bei der

- eine vorbestimmte Anzahl von n Transpondern in dem Erfassungsbereich des Schreib-/Lesegerätes oder des Lesegerätes angeordnet wird mit n ≥ 1,
- das stärkste Signal des oder der n Transponder erfasst wird und dieses Signal als erster Signalschwellwert (Startwert) festgelegt wird, und
- das schwächste Signal des oder der n Transponder erfasst wird und dieses Signal als zweiter Signalschwellwert (Filterwert) festgelegt wird.

Bei der Kalibrierung werden zum Beispiel zehn T-Shirts im Erfassungsbereich des Schreib-/Lesegerätes oder des Lesegerätes angeordnet. Der Startwert wird ermittelt, indem der Transponder des untersten T-Shirts mit dem stärksten RSSI-Wert ausgelesen wird. Dieser Wert stellt den Startwert dar. Grundsätzlich besteht auch die Möglichkeit, mehrere Transponder auszulesen und den RSSI-Wert der mehreren Transponder als ersten Signalschwellwert (Startwert) festzulegen. Das schwächste Signal des oder der n Transponder wird erfasst, indem bei dem oben genannten Beispiel der RSSI-Wert des Transponders des obersten T-Shirts erfasst wird. Dieser Wert legt den zweiten Signalschwellwert (Filterwert) fest. RSSI-Werte, die kleiner oder gleich sind, werden herausgefiltert, das heißt Transponder mit derartigen RSSI-Werten werden nicht gelesen.

Gemäß einer vorteilhaften Weiterbildung dieses Verfahrens zur Kalibrierung wird optisch überprüft, ob die Anzahl der ausgelesenen Transponder der Anzahl der Waren/Gegenstände entspricht. Werden zum Beispiel zehn T-Shirts im Bereich des Schreib-/Lesegerätes oder des Lesegerätes angeordnet, wird optisch überprüft, ob auch tatsächlich zehn T-Shirts mit zehn Transpondern angeordnet wurden.

Das Kalibrierverfahren kann vorteilhaft automatisch durchgeführt werden, indem mit Transpondern versehene Gegenstände innerhalb der Funkreichweite des Schreib-/Lesegerätes oder Lesegerätes angeordnet werden und das oben beschriebene Verfahren durchgeführt wird.

Gemäß einer weiteren vorteilhaften Ausführungsform der Erfindung ist vorgesehen, dass der erste Signalschwellwert (Startwert) durch einen maximalen RSSI-Wert wenigstens eines der n zu erfassenden Transponder abzüglich einer vorbestimmten Toleranz x festgelegt wird. Beispielsweise wird der erste Signalschwellwert (Startwert) festgelegt durch den RSSI-Wert eines ersten Transponders. Wird dieser Transponder in den Erfassungsbereich des Schreib-/Lesegerätes oder Lesegerätes gebracht und mit dem kürzesten Abstand zu der Antenne angeordnet, wird hierdurch ein maximaler RSSI-Wert festgelegt. Zu diesem RSSI-Wert wird ein Toleranzwert in der Größe x festgelegt, das heißt,

$$\text{erster Signalschwellwert} = \text{Startwert} = \text{maximaler RSSI} - x$$

Als Beispiel kann der maximale RSSI-Wert des ersten Transponders -55 dBm betragen. Von diesem Wert wird eine Toleranz von beispielsweise x = 3 dB subtrahiert, so dass der Lese- und Datenverarbeitungszyklus gestartet wird ab einem ersten Schwellwert von -58 dBm. Das bedeutet, dass, wenn ein Transponder mit einem RSSI-Wert von -58 dBm in den Erfassungsbereich des Schreib-/Lesegerätes gebracht wird, der Lese- und Datenverarbeitungszyklus trotzdem gestartet wird. Der Lese- und Datenverarbeitungszyklus wird nicht gestartet, wenn ein Transponder mit einem RSSI-Wert von beispielsweise -60 dBm in den Erfassungsbereich gebracht wird. Das Signal dieses Transponders ist zu schwach.

Bei einem Bereich von -20 dBm bis -85 dBm werden Transponder mit einem RSSI-Wert von beispielsweise -55 dBm als schwächer bezeichnet als mit einem RSSI-Wert von beispielsweise -33 dBm. Der Grund hierfür ist das negative Vorzeichen, mit dem der RSSI-Wert in der Einheit dBm angegeben wird.

Wird ein entsprechender Transponder bei einer Messung in den Erfassungsbereich gebracht, wird die Messung (Lese- und Datenverarbeitungszyklus) gestartet, wenn der erste Signalschwellwert überschritten wird.

Bei einer Kalibrierung werden zum Beispiel nacheinander ein bis zehn Transponder in den Erfassungsbereich des Schreib-/Lesegerätes oder Lesegerätes angeordnet. Der Startwert wird ermittelt, indem der Transponder mit dem größten RSSI-Wert erfasst wird. Dieser Wert ist beispielsweise -55 dBm. Es ist eine Sicherheit von -3 dB vorgesehen, so dass schon bei einem RSSI-Wert von -58 dBm der Schreib-/ Lesezyklus gestartet wird.

Gemäß einer weiteren vorteilhaften Ausführungsform der Erfindung ist vorgesehen, dass der zweite Signalschwellwert (Filterwert) durch einen minimalen RSSI wenigstens eines der n zu erfassenden Transponder abzüglich einer vorbestimmten Toleranz y festgelegt wird:

$$\text{zweiter Signalschwellwert} = \text{Filterwert} = \text{minimaler RSSI} - y$$

In dem oben genannten Beispiel mit den T-Shirts würde dies bedeuten, dass bei dem Transponder des obersten T-Shirts beispielsweise ein RSSI-Wert von -70 dBm vorliegt. Hier werden beispielsweise 3 dB als Toleranz abgezogen, so dass ab einem RSSI-Wert von -73 dBm, das heißt ab diesem Filterwert weitere Transpondererfassungen unterdrückt werden, beispielsweise Transponder mit einem RSSI-Wert von -76 dBm werden nicht gelesen.

Gemäß einer weiteren vorteilhaften Ausführungsform der Erfindung wird das Verfahren zum Kalibrieren wenigstens zwei Mal wiederholt. Hierdurch werden die bei dem Kalibrierverfahren ermittelten Werte genauer.

Gemäß einer weiteren vorteilhaften Ausführungsform ist vorgesehen, dass das Verfahren zum Kalibrieren mit unterschiedlichen Leistungen des hochfrequenten elektromagnetischen Wechselfeldes durchgeführt wird. Bei diesem Verfahren wird ermittelt, welche Leistung erforderlich ist. Beispielsweise werden bei einer Leistung von 25 mW zehn Transponder (mit den Waren oder Gegenständen) in dem Erfassungsbereich des Schreib-/Lesegerätes oder des Lesegerätes angeordnet. Werden alle zehn Transponder ausgelesen, reicht die Leistung aus. Werden zum Beispiel nur acht Transponder ausgelesen, wird die Leistung auf beispielsweise 50 mW erhöht. Werden bei dieser Erhöhung auf 50 mW nur neun Transponder ausgelesen, wird auf eine Leistung von beispielsweise 75 mW erhöht. Dieses Verfahren wird so lange durchgeführt, bis alle zehn Transponder ausgelesen werden.

Da Transponder unterschiedliche Empfindlichkeiten je nach Hersteller aufweisen, kann es sein, dass die Transponder eines ersten Herstellers mit einer Leistung von 50 mW ausgelesen werden, während die Transponder eines anderen Herstellers beispielsweise erst bei 75 mW ausgelesen werden. Aus diesem Grunde ist es sinnvoll, das Kalibrierverfahren mit den zu verwendenden Transpondern durchzuführen. Die Leistung soll möglichst gering sein, um Transponder, die sich außerhalb des Erfassungsbereiches befinden, nicht auszulesen.

Gemäß einer weiteren vorteilhaften Ausführungsform der Erfindung ist vorgesehen, dass durch das Verfahren zur Kalibrierung

- die Signalschwellwerte (Startwert, Filterwert) und die Zeitspanne des Lese- und Datenverarbeitungszyklus und/oder
- die erforderliche Leistung des hochfrequenten elektromagnetischen Wechselfeldes zur Durchführung des erfindungsgemäßen Verfahrens bestimmt wird.

Die Bestimmung der maximalen Zeitspanne des Schreib-/ Lesezyklus kann ebenfalls automatisch erfasst werden. Grundsätzlich besteht die Möglichkeit, dass zum Beispiel eine Zeitspanne von 500 Millisekunden zur Messung von zehn Transpondern erforderlich ist. Hier wird ebenfalls vorteilhaft mit einer Toleranz von beispielsweise plus 30 % gearbeitet, so dass bei einer derartigen Messung der Schreib-/ Lesezyklus nach zum Beispiel 700 Millisekunden gestoppt wird.

Dieses Kalibrierverfahren kann vorteilhaft automatisiert durchgeführt werden.

Alternativ zu dem Verfahren zum Kalibrieren kann beispielsweise vom Hersteller ein Profil für verschiedene typische Anwendungen im Vorhinein festgelegt sein. Beispielsweise kann der Kunde den ersten Signalschwellwert (Startwert) ändern, wenn der Kunde Transponder mit einer höheren Empfindlichkeit verwendet.

Die Kalibrierdaten werden in dem Schreib-/Lesegerät oder Lesegerät abgespeichert, bis eine neue Kalibrierung durchgeführt wird oder ein neues Profil geladen wird.

Gemäß einer weiteren vorteilhaften Ausführungsform der Erfindung kann das Verfahren zum Kalibrieren mit einem vordefinierten Nummernbereich UID/EPC durchgeführt werden. UID bedeutet Unique Identifier. Es handelt sich hierbei um die Seriennummer des Transponders. Die Transponder verschiedener Hersteller weisen verschiedene Nummernbereiche auf. Ein Filter kann sämtliche Nummernbereiche ausblenden, die für die anstehende Messung nicht von Interesse sind. Das heißt, es werden nur die interessierenden Transponder antworten.

Über einen so genannten "Select"-Befehl kann Transpondern mitgeteilt werden, dass nur diejenigen Transponder antworten sollen, die einer "Maske" innerhalb des Befehls entsprechen. Diese Maske kann aber nicht nur auf die UID oder EPC angewendet werden, sondern auf jeden Bereich im Speicher.

Die Maske kann nicht nur für den Kalibriervorgang, sondern auch für die spätere Anwendung verwendet werden. So werden nicht adressierte Transponder erst gar nicht antworten.

Die erfindungsgemäße Vorrichtung zur Durchführung des erfindungsgemäßen Verfahrens mit einem Schreib-/Lesegerät oder Lesegerät zum Auslesen, zur Selektion und Meldung einer Anzahl aus einer Vielzahl von berührungslos auslesbaren Transpondern an eine Auswerteeinheit,

- wobei das Schreib-/Lesegerät oder das Lesegerät zum Auslesen der innerhalb einer Funkreichweite befindlichen Transponder mittels zumindest eines Lesezyklus und zumindest eines Lese- und Datenverarbeitungszyklus ausgebildet ist,
- wobei die Vorrichtung wenigstens eine Sende-/Empfangsantenne oder wenigstens eine Sende- und wenigstens eine Empfangsantenne aufweist,
- wobei das Schreib-/Lesegerät oder das Lesegerät eine Filtereinrichtung zur Selektion zumindest eines der ausgelesenen Transponder aufweist,
- wobei das Schreib-/Lesegerät oder das Lesegerät zur Meldung des oder der selektierten Transponder an die Auswerteeinheit ausgebildet ist,
- wobei das Schreib-/Lesegerät oder das Lesegerät einen integrierten Empfangssignalstärke-Indikator zum Erfassen eines RSSI-Wertes für die von den Transpondern empfangenen Signale aufweist,
- wobei ein Sender zur Erzeugung eines hochfrequenten elektromagnetischen Wechselfeldes vorgesehen ist, zeichnet sich dadurch aus,
- dass die Vorrichtung eine Auflagefläche für die zu erfassenden Waren oder Gegenstände mit den an den Waren oder Gegenständen angeordneten Transpondern aufweist, und
- dass innerhalb oder unterhalb der Auflagefläche die wenigstens eine Sende-/Empfangsantenne oder die wenigstens eine Sende- und wenigstens eine Empfangsantenne des Schreib-/Lesegerätes oder des Lesegerätes angeordnet ist.

Die erfindungsgemäße Vorrichtung mit dem Schreib-/ Lesegerät oder dem Lesegerät ist derart ausgestaltet, dass sie RSSI-Werte der Transponder erfassen kann, das heißt, die Vorrichtung weist einen integrierten Empfangssignalstärke-Indikator auf. Darüber hinaus weist die Vorrichtung einen Erfassungsbereich auf, so dass die Daten von sich innerhalb des Erfassungsbereiches befindlichen Transpondern von dem Schreib-/Lesegerät oder Lesegerät innerhalb eines Lese- und Datenverarbeitungszyklus ausgelesen und verarbeitet werden. Das Schreib-/Lesegerät oder das Lesegerät weist hierzu wenigstens eine Sende-/Empfangsantenne oder wenigstens eine Sende- und wenigstens eine Empfangsantenne auf. Weiterhin ist eine Filtereinrichtung zur Selektion zumindest eines der ausgelesenen Transponder vorgesehen.

Das Schreib-/Lesegerät oder Lesegerät weist vorteilhaft wenigstens eine RFID-Antenne auf. Diese dient zum einen zur Energieübertragung zum Transponder. Dazu wird die Antenne ihrerseits durch einen Sender mit Energie versorgt. Um die Leistung optimal von der Endstufe des Schreib-/Lesegerätes in die Antenne zu übertragen, müssen Schreib-/Lesegerät-Endstufe und Schreib-/Lesegerät-Antenne den gleichen Eingangs- beziehungsweise Ausgangswiderstand besitzen. Eine RFID-Antenne benötigt also eine bestimmte Eingangsimpedanz, damit die Energie von der Schreib-/Lesegerät-Endstufe optimal zur Antenne übertragen wird. Zum anderen muss die Schreib-/Lesegerät-Antenne möglichst gut auf die Frequenzbereiche des RFID-Systems abgestimmt sein, um eine gute Energie- und Datenübertragung zu erreichen.

Das Schreib-/Lesegerät ist derart ausgebildet, dass es einen Sender zur Erzeugung eines hochfrequenten elektromagnetischen Wechselfeldes aufweist.

Darüber hinaus weist die erfindungsgemäße Vorrichtung mit einem Schreib-/Lesegerät oder Lesegerät eine Auflagefläche auf. Auf dieser Auflagefläche können die zu erfassenden Waren oder Gegenstände mit den an den Waren oder Gegenständen angeordneten Transpondern angeordnet werden. Beispielsweise können, um bei dem oben genannten Beispiel zu bleiben, T-Shirts, die in einem Stapel angeordnet sind, auf der Auflagefläche angeordnet werden. Innerhalb oder unterhalb der Auflagefläche ist die wenigstens eine Sende-/ Empfangsantenne oder die wenigstens eine Sende- und wenigstens eine Empfangsantenne angeordnet. Die wenigstens eine Sende-/Empfangsantenne oder die wenigstens eine Sende- und wenigstens eine Empfangsantenne kann/können in der Auflagefläche integriert sein. Es ist jedoch auch möglich, die Sende-/Empfangsantenne oder die wenigstens eine Sende- und wenigstens eine Empfangsantenne unterhalb der Auflagefläche anzuordnen.

Das Schreib-/Lesegerät oder das Lesegerät kann in der Vorrichtung angeordnet sein. Es ist jedoch auch möglich, das Schreib-/Lesegerät oder das Lesegerät außerhalb der Vorrichtung anzuordnen.

Die Auswerteeinheit zur Auswertung der Daten der selektierten Transponder und/oder die Filtereinrichtung kann in dem Schreib-/Lesegerät oder dem Lesegerät angeordnet sein. Die Auswerteeinheit und/oder die Filtereinrichtung kann jedoch auch in einem externen Computer angeordnet sein.

Die erfindungsgemäße Vorrichtung ist vorteilhaft plattenförmig oder "Pad"-förmig ausgebildet. In einer oberen Fläche der Platte oder des Pads, nämlich der Auflagefläche für die Waren oder Gegenstände, kann die wenigstens eine Sende-/Empfangsantenne oder die wenigstens eine Sende- und wenigstens eine Empfangsantenne angeordnet sein. Die plattenförmige Vorrichtung oder das Pad kann auch hohl ausgebildet sein, so dass die wenigstens eine Sende-/Empfangsantenne oder die wenigstens eine Sende- und wenigstens eine Empfangsantenne unterhalb der Auflagefläche angeordnet sein kann/können.

Die erfindungsgemäße Vorrichtung kann jedoch auch eine andere Form aufweisen. Sie kann beispielsweise kastenförmig mit einer Grundplatte und Seitenflächen oder auch wannenförmig ausgebildet sein.

Die erfindungsgemäße Vorrichtung weist den Vorteil auf, dass durch das dauerhafte Auslesen der Daten von Transpondern innerhalb der Funkreichweite ununterbrochen Transponder, die in den Erfassungsbereich der Vorrichtung gebracht werden, ausgelesen werden können.

Durch die Anordnung der wenigstens einen Sende-/Empfangsantenne oder der wenigstens einen Sende- und wenigstens einen Empfangsantenne in der Auflagefläche oder unterhalb der Auflagefläche ist gewährleistet, dass Waren oder Gegenstände, an denen Transponder angeordnet sind, und die auf der Auflagefläche angeordnet sind, in dem Erfassungsbereich der wenigstens einen Sende-/Empfangsantenne oder der wenigstens einen Sende- und wenigstens einen Empfangsantenne angeordnet sind und die entsprechenden Transponder zuverlässig ausgelesen werden.

Durch das Ausbilden der Auflagefläche können die Waren oder Gegenstände zuverlässig in dem Erfassungsbereich der wenigstens einen Sende-/Empfangsantenne oder der wenigstens einen Sende- und wenigstens einen Empfangsantenne angeordnet werden, so dass es nicht zu Fehlauslesungen oder Nicht-Auslesungen von Transpondern kommt.

Gemäß einer weiteren vorteilhaften Ausführungsform der Erfindung ist vorgesehen, dass die Auflagefläche wenigstens eine Markierung für die auf der Auflagefläche anzuordnenden Waren oder Gegenstände aufweist.

Die Markierungen sind vorteilhaft derart ausgebildet, dass, wenn die Waren oder Gegenstände innerhalb der Markierungen angeordnet werden, sich die Transponder auf jeden Fall im Erfassungsbereich der wenigstens einen Sende-/ Empfangsantenne oder der wenigstens einen Sende- und wenigstens einen Empfangsantenne befinden und damit zuverlässig ausgelesen werden.

Gemäß einer weiteren vorteilhaften Ausführungsform der Erfindung ist vorgesehen, dass die wenigstens eine Sende-/ Empfangsantenne oder die wenigstens eine Sende- und wenigstens eine Empfangsantenne des Schreib-/Lesegerätes oder Lesegerätes an fünf von sechs Seiten geschirmt ausgebildet ist.

Wie schon ausgeführt, weist die Vorrichtung eine Auflagefläche auf. Innerhalb oder unterhalb dieser Auflagefläche ist die wenigstens eine Sende-/Empfangsantenne oder die wenigstens eine Sende- und wenigstens eine Empfangsantenne angeordnet.

Vorteilhaft sind die vier Seitenflächen und eine Grundfläche der Vorrichtung geschirmt ausgebildet.

Durch die Schirmung ist es möglich, eine Dämpfung der Signale zu erzielen. Die wenigstens eine Sende-/Empfangsantenne oder die wenigstens eine Sende- und wenigstens eine Empfangsantenne strahlt damit überwiegend nach oben ab, das heißt, der Grundfläche der Vorrichtung gegenüberliegend ab.

Gemäß einer weiteren vorteilhaften Ausführungsform der Erfindung ist vorgesehen, dass das Schreib-/Lesegerät oder das Lesegerät eine Filtereinrichtung zur Filterung wenigstens eines Nummernbereiches UID/EPC der Transponder aufweist. Hierdurch kann eine Filterung vorgenommen werden nach verschiedenen Nummernbereichen der Seriennummer der Transponder. Hierdurch ist es möglich, Nummernbereiche auszublenden, die für die anstehende Messung nicht von Interesse sind.

Gemäß einer weiteren vorteilhaften Ausführungsform der Erfindung kann die Auswerteeinheit beispielsweise ein Mikrocontroller sein. Die Auswerteeinheit ist vorteilhaft in der erfindungsgemäßen Vorrichtung integriert. Die Auswerteeinheit kann auch in dem Schreib-/Lesegerät integriert sein.

In der Auswerteeinheit werden die erfassten Messwerte, beispielsweise die Anzahl der Transponder oder Daten der Transponder zum Beispiel in einem Arbeitsspeicher abgespeichert oder einer weiteren Verarbeitung zugeführt.

Auch die Profile, die für verschiedene Anwendungen in dem Schreib-/Lesegerät oder Lesegerät verwendet werden, werden vorteilhaft in der Vorrichtung mit dem Schreib-/ Lesegerät oder mit dem Lesegerät gespeichert.

Bei den Verfahren zum Kalibrieren, die vor dem Verfahren zum Erfassen der Transponder durchgeführt werden, kann das System selbst lernen, wie die Messwerte und die Signalschwellwerte aussehen.

Beispielsweise kann in einem Kalibrierverfahren erfasst werden, wenn n Gegenstände mit Transpondern in dem Erfassungsbereich des Schreib-/Lesegerätes oder des Lesegerätes angeordnet werden, und das Schreib-/Lesegerät oder Lesegerät zum Beispiel n+1 Transponder ausgelesen hat, dass ein Transponder außerhalb der korrekt erfassten Menge liegt.

Wie schon ausgeführt, stellt der RSSI-Wert einen Indikator für die Empfangsfeldstärke dar. Bei dem RSSI-Wert wird die Amplitude des empfangenen Signales gemessen. Der RSSI-Wert bildet den Abstand zwischen Transponder und Sende-/Empfangsantenne ab. Das Signal entspricht einer Eingangsstärke.

Vorteilhaft kann eine Anzeigevorrichtung, wie zum Beispiel ein Computer, ein Tablet oder ein Handy vorgesehen sein, um das Ergebnis der Messung anzuzeigen.

Die erfindungsgemäße Vorrichtung kann auch einen Monitor aufweisen. Über diesen Monitor kann optisch dargestellt werden, ob der oder die Transponder der aufgelegten Waren oder Gegenstände ordnungsgemäß erfasst wurden und ob die erwartete Anzahl von Transpondern erfasst wurde.

Die Anordnung von zwei oder mehr Sende-/Empfangsantennen oder die wenigstens eine Sende- und wenigstens eine Empfangsantenne in der erfindungsgemäßen Vorrichtung weist den Vorteil auf, dass Leselöcher vermieden werden. Es handelt sich bei Leselöchern um Bereiche, in denen Transponder nicht oder nicht zuverlässig durch Interferenzen gelesen werden. Leselöcher einer ersten Antenne werden durch eine zweite Antenne geschlossen.

Aus diesem Grunde ist die Anordnung von wenigstens zwei Schreib-/Leseantennen vorteilhaft.

Gemäß einer weiteren vorteilhaften Ausführungsform der Erfindung ist vorgesehen, dass der Erfassungsbereich der wenigstens einen innerhalb oder unterhalb der Auflagefläche angeordneten Sende-/Empfangsantenne oder die wenigstens eine Sende- und wenigstens eine Empfangsantenne größer ist als eine Grundfläche der aufgelegten Waren oder Gegenstände. Hierdurch wird gewährleistet, dass sich die an der Ware oder den Gegenständen angeordneten Transponder auf jeden Fall im Erfassungsbereich der wenigstens einen Sende-/ Empfangsantenne oder die wenigstens eine Sende- und wenigstens eine Empfangsantenne befinden und damit zuverlässig ausgelesen werden.

Eine weitere Möglichkeit der Erfassung der an Waren oder Gegenständen angeordneten Transponder besteht darin, dass eine Filterung der Transponder vorgenommen wird. Die Waren oder Gegenstände werden auf der Auflagefläche der erfindungsgemäßen Vorrichtung abgelegt. Wird hierbei eine Anzahl A von Transpondern erfasst, die größer ist als die Anzahl B der aufgelegten Waren oder Gegenstände, werden die Messwerte von den B Transpondern mit den stabilsten Messwerten ausgelesen. Die überzähligen Transponder (A - B) stellen wahrscheinlich eine Reflexion dar.

Vorteilhaft ist das Schreib- /Lesegerät oder Lesegerät als RFID- Schreib- /Lesegerät oder RFID-Lesegerät ausgebildet (RFID = Radio Frequency Identification).

Weitere Merkmale und Vorteile der Erfindung ergeben sich anhand der zugehörigen Zeichnungen, in denen verschiedene Ausführungsformen einer erfindungsgemäßen Vorrichtung nur beispielhaft dargestellt sind, ohne die Erfindung auf diese Ausführungsbeispiele zu beschränken. In den Zeichnungen zeigen:

Fig. 1     eine erfindungsgemäße Vorrichtung in perspektivischer Ansicht;

Fig. 2     eine erfindungsgemäße Vorrichtung mit aufgelegten Waren in perspektivischer Ansicht;

Fig. 3     eine erfindungsgemäße Vorrichtung angeordnet auf einem Tisch in perspektivischer Ansicht;

Fig. 4     eine Einzelheit der Vorrichtung;

Fig. 5     eine Einzelheit der Vorrichtung;

Fig. 6     eine erfindungsgemäße Vorrichtung in Draufsicht mit einem externen Computer;

Fig. 7     eine erfindungsgemäße Vorrichtung mit innerhalb und außerhalb des Erfassungsbereiches angeordneten Transpondern in schematischer Darstellung;

Fig. 8 eine schematische Darstellung eines Schreib-/Lesegerätes;

Fig. 9 ein Ablaufdiagramm zur Darstellung des erfindungsgemäßen Verfahrens.

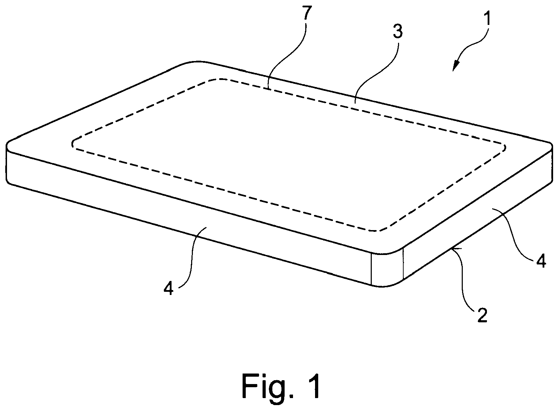

Fig. 1 zeigt eine Vorrichtung 1, die ein Schreib-/ Lesegerät 14 oder Lesegerät zur Erfassung, Selektion und Meldung einer Anzahl aus einer Vielzahl von berührungslos auslesbaren Transpondern an eine Auswerteeinheit 35 aufweist. Die Vorrichtung 1 weist eine Grundfläche 2 auf, auf der die Vorrichtung 1 aufliegt. Weiterhin weist die Vorrichtung 1 eine Auflagefläche 3 auf sowie vier Seitenflächen 4. Darüber hinaus ist in der Auflagefläche 3 eine Markierung 7 angeordnet.

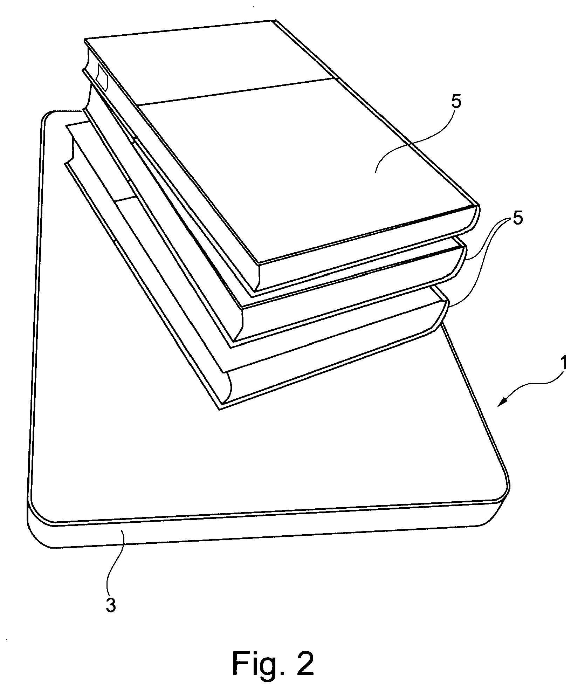

Gemäß Fig. 2 sind auf der Vorrichtung 1 Waren 5, im vorliegenden Fall Bücher angeordnet. Die Bücher 5 sind auf der Auflagefläche 3 angeordnet. In oder an den Büchern 5 sind Transponder (in Fig. 2 nicht dargestellt) angeordnet, die von der Vorrichtung 1 ausgelesen werden, wie im Folgenden noch erläutert wird.

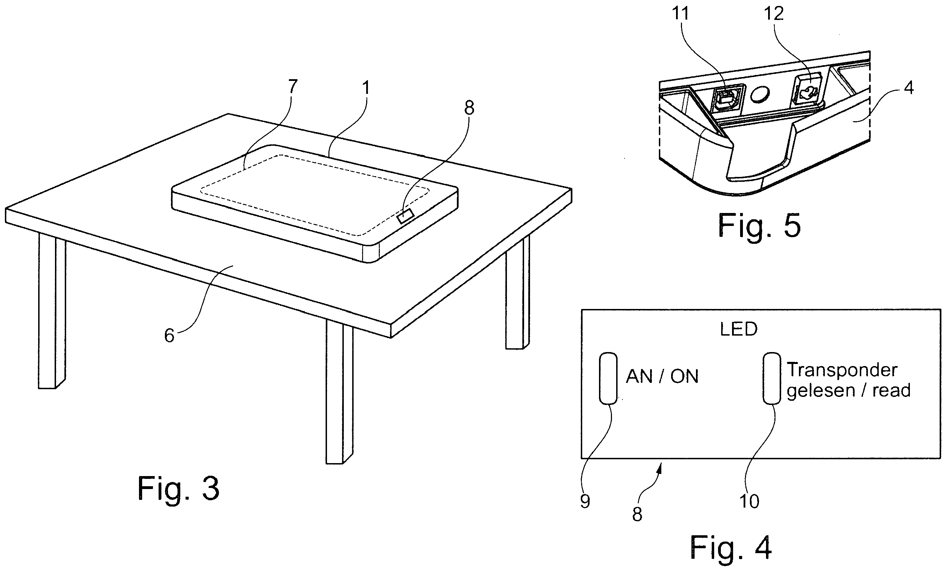

Gemäß Fig. 3 ist die Vorrichtung 1 auf einem Tisch 6 angeordnet. Der Tisch 6 ist als Arbeitstisch ausgebildet, so dass eine Person (nicht dargestellt) an dem Tisch 6 mit der Vorrichtung 1 arbeiten kann.

Wie in den Fig. 1 und 3 dargestellt, weist die Vorrichtung 1 eine Markierung 7 auf. Die Markierung 7 ist als eine in der Auflagefläche 3 angeordnete Markierung ausgebildet. Die Markierung 7 ist derart ausgebildet, dass sie eine innerhalb der Markierung 7 angeordnete Fläche kennzeichnet. Innerhalb dieser Fläche sind die Waren oder Gegenstände 5 aufzulegen auf der Auflagefläche 3. Werden die Waren oder Gegenstände 5 (mit den Transpondern) in einem Bereich oberhalb der Auflagefläche 3 innerhalb der Markierung 7 angeordnet, befinden sich die Transponder in einem Erfassungsbereich einer Antenne eines Schreib-/Lesegerätes 14 oder Lesegerätes, wie ebenfalls noch im Folgenden dargestellt wird.

In der Auflagefläche 3 ist eine Anzeigevorrichtung 8 angeordnet.

Die Anzeigevorrichtung 8 ist in Fig. 4 genauer dargestellt. Die Anzeigevorrichtung weist zwei LEDs 9, 10 auf. Die zwei LEDs können auch durch eine einzige LED, beispielsweise mehrfarbige LED realisiert werden.

Die Anzeigevorrichtung 9 gibt den Betriebszustand der Vorrichtung 1 an, nämlich ob die Vorrichtung angeschaltet oder ausgeschaltet ist. Die Anzeigevorrichtung 10 ist als LED ausgebildet.

Die Anzeigevorrichtung 10 zeigt, ob der oder die Transponder oder ob mindestens ein Transponder gelesen ist/sind.

Fig. 5 zeigt eine Einzelheit der Vorrichtung 1. Die Vorrichtung 1 weist einen USB-Anschluss 11 auf. Darüber hinaus ist ein Anschluss 12 für eine Spannungsversorgung vorgesehen. Anstelle des USB-Anschlusses 11 können auch andere Anschlüsse und/oder Datenübertragungsmöglichkeiten vorgesehen sein.

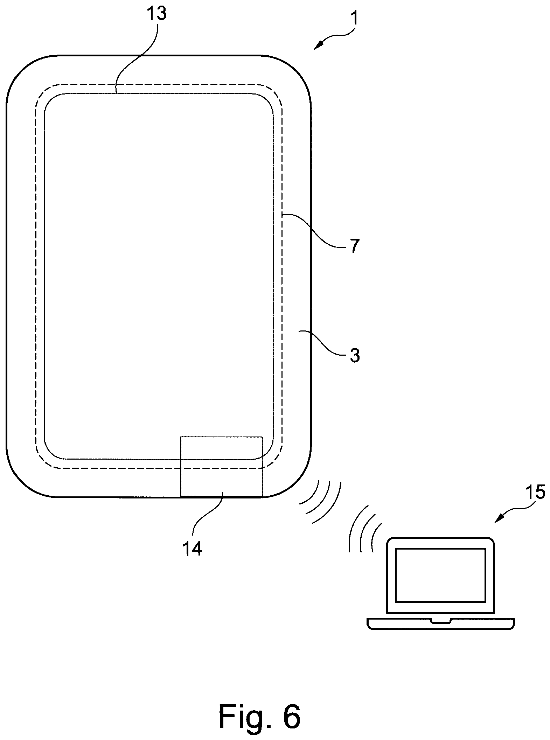

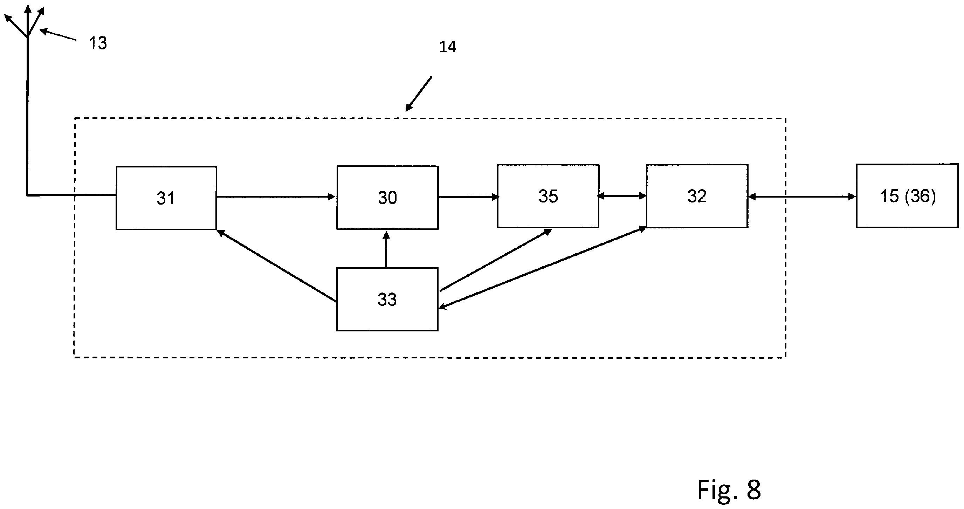

Fig. 6 zeigt die Vorrichtung 1 in Draufsicht. Die Vorrichtung 1 weist die Markierung 7 auf, innerhalb der die Waren oder Gegenstände auf und oberhalb der Auflagefläche 3 anzuordnen sind. Innerhalb der Auflagefläche 3 der Anzeigevorrichtung 1 ist eine Sende-/Empfangsantenne 13 angeordnet sowie ein Schreib-/Lesegerät 14. Das Schreib-/Lesegerät 14 und die Sende-/Empfangsantenne 13 sind lediglich schematisch dargestellt. Das Schreib-/Lesegerät 14 weist einen Sender zur Erzeugung eines hochfrequenten elektromagnetischen Wechselfeldes auf. Die einzelnen Komponenten des Schreib-/Lesegerätes sind in Fig. 6 nicht dargestellt, sondern in Fig. 8. Das hochfrequente elektromagnetische Wechselfeld wird von der Sende-/Empfangsantenne 13 abgestrahlt.

Die Vorrichtung 1 mit dem Schreib-/Lesegerät 14 liest, selektiert und meldet eine Anzahl aus einer Vielzahl von berührungslos auslesbaren Transpondern an eine Auswerteeinheit 35 (in Fig. 8 dargestellt), die in dem Schreib-/Lesegerät 14 angeordnet ist. Die Auswerteeinheit 35 gibt die Informationen über die Anzahl der gelesenen Transponder und deren Daten an einen Computer 15 weiter, der als Anzeigevorrichtung dient. Es können auch andere Anzeigevorrichtungen, wie zum Beispiel ein Tablet oder ein mobiles Telefon vorgesehen sein. Die Übertragung der Meldung der Anzahl von Transpondern an den Computer 15 kann berührungslos oder kabelgebunden erfolgen. In Fig. 6 ist eine Übermittlung der Daten per Funk schematisch dargestellt.

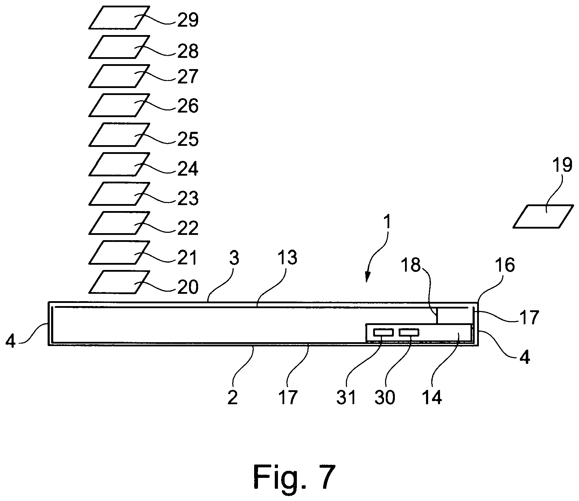

Fig. 7 zeigt die Vorrichtung 1 mit dem Schreib-/Lesegerät 14 und der Sende-/Empfangsantenne 13. In einem schematisch dargestellten Gehäuse 16 der Vorrichtung 1 ist eine Schirmung 17 vorgesehen. Die Schirmung 17 ist derart ausgebildet, dass das elektromagnetische Wechselfeld, welches von der Antenne 13 abgestrahlt wird, in Richtung der Grundfläche 2 und der Seitenflächen 4 geschirmt wird. Die Schirmung 17 erstreckt sich auch in Richtung der nicht dargestellten Seitenflächen 4, die vor und hinter der Zeichenebene liegen.

In dem Schreib-/Lesegerät 14 ist eine Filtereinrichtung 30 angeordnet. Die Antenne 13 ist über eine schematisch dargestellte Verbindungsleistung 18 mit dem Schreib-/ Lesegerät 14 verbunden. Das Schreib-/Lesegerät 14 und die Sende-/Empfangsantenne 13 bilden vorrichtungsmäßig eine Einheit. Das Schreib-/Lesegerät 14 weist wenigstens eine Sende-/Empfangsantenne 13 auf.

Ist kein Schreib-/Lesegerät 14, sondern nur ein Lesegerät vorhanden, weist das Lesegerät ebenfalls wenigstens eine Sende-/Empfangsantenne 13 oder wenigstens eine Sende- und wenigstens eine Empfangsantenne auf.

Gemäß Fig. 7 sind Transponder 20 bis 29 im Bereich der Vorrichtung 1 angeordnet, und zwar auf der der Grundfläche 2 gegenüberliegenden Seite. Durch die Schirmung 17 strahlt die Sende-/Empfangsantenne 13 überwiegend in Richtung der der Grundfläche 2 gegenüberliegenden Fläche ab. Der Grundfläche 2 gegenüberliegend ist die Auflagefläche 3 angeordnet.

Die Transponder 20 bis 29 sind lediglich schematisch dargestellt. Diese sind an Waren, zum Beispiel T-Shirts, Wäschestücken, Büchern oder dergleichen angeordnet. Die Waren selbst sind in Fig. 7 nicht dargestellt.

Das erfindungsgemäße Verfahren funktioniert folgendermaßen. Die Transponder 20 bis 29 befinden sich innerhalb eines Erfassungsbereiches der Sende-/Empfangsantenne 13. Die Sende-/Empfangsantenne 13 ist Bestandteil der Vorrichtung 1. Das Schreib-/Lesegerät 14 weist eine Filtereinrichtung (in Fig. 7 nicht dargestellt) auf, welche wenigstens einen der ausgelesenen Transponder 20 bis 29 selektiert. Das Schreib-/Lesegerät 14 meldet den oder die selektierten Transponder 20 bis 29 an den Computer 15. Das Schreib-/Lesegerät 14 erzeugt mittels eines Senders (in Fig. 7 nicht dargestellt) ein hochfrequentes elektromagnetisches Wechselfeld.

Es wird ein erster Signalschwellwert (Startwert) festgelegt, um den Lese- und Datenverarbeitungszyklus zum Auslesen des oder der Transponder zu starten, nämlich wenn der erste Signalschwellwert überschritten wird. Der erste Signalschwellwert wird überschritten, wenn der RSSI-Wert eines Transponders 20 oder der größte RSSI-Wert von mehreren Transpondern 20 bis 29 größer als der erste Signalschwellschwert ist oder gleich dem ersten Signalschwellwert ist. Weiterhin ist ein zweiter Signalschwellwert (Filterwert) vorgesehen zum Herausfiltern von zu ignorierenden Transpondern. Vor dem Start des Lese- und Datenverarbeitungszyklus werden sämtliche vorhergehenden Messdaten von Transpondern in der Auswerteeinheit 35 ignoriert oder gelöscht.

Die Signalschwellwerte sind als RSSI-Werte ausgebildet. Eine Filtereinrichtung 30 selektiert den oder die ausgelesenen Transponder 20 bis 29. Die Filtereinrichtung 30 erkennt darüber hinaus, dass der Transponder 19 einen RSSI-Wert aufweist, der kleiner als der zweite Signalschwellwert (Filterwert) ist und dass deshalb die Daten dieses Transponders 19 bei dem Lese- und Datenverarbeitungszyklus der Transponder 20 bis 29 nicht zu verwerten ist.

Ein Sender/Empfänger 31 erzeugt ein hochfrequentes elektromagnetisches Wechselfeld, welches von der Antenne 13 abgestrahlt wird.

Wird ein neuer Lesezyklus gestartet, werden alle vorhergehenden Messdaten von Transpondern in der Auswerteeinheit 35 gelöscht oder ignoriert, so dass tatsächlich eine neue Messung durchgeführt wird. Die Daten können an den Computer 15 (in Fig. 6 dargestellt) übermittelt werden und in dem Computer 15 gespeichert bleiben oder sie können in dem Computer 15 auch nur angezeigt werden.

Darüber hinaus wird der Lese- und Datenverarbeitungszyklus auf eine maximale Zeitspanne begrenzt, beispielsweise auf eine Zeitspanne kleiner zwei Sekunden.

Bei dem Verfahren zum Kalibrieren der Vorrichtung wird beispielsweise eine Ware lediglich mit dem Transponder 20 auf der Vorrichtung 1, das heißt auf der Auflagefläche 3 angeordnet. Hierdurch wird ein Startlevel erfasst, nämlich ein RSSI-Wert, der auch als erster Signalschwellwert (Startwert) bezeichnet wird. Hierbei handelt es sich um den RSSI-Wert, bei dem, wenn er erreicht oder überschritten wird, der Lese- und Datenverarbeitungszyklus gestartet wird. Vorteilhaft wird von diesem RSSI-Wert ein Toleranzwert abgezogen, damit, wenn ein Transponder 20 mit einem kleineren RSSI-Wert als der Startwert (gemessener Wert abzüglich der Toleranz) in den Schreib-/Lesebereich der Antenne 13 gebracht wird, der Lese- und Datenverarbeitungszyklus zuverlässig gestartet wird, das heißt, dass die Daten der ausgelesenen Transponder weiterverarbeitet werden. Die Verarbeitung der Daten wird jedoch nur von Transpondern mit RSSI-Werten gestartet, die in dem Toleranzbereich liegen. Transponder mit kleineren RSSI-Werten als der Toleranzbereich können den Lese- und Datenverarbeitungszyklus nicht starten.

Darüber hinaus existiert ein zweiter Signalschwellwert (Filterwert). Hierbei handelt es sich um einen minimalen RSSI-Wert. Der RSSI-Wert des Transponders 19 ist kleiner als dieser minimale RSSI-Wert. Die Daten dieses Transponders 19 werden, weil der Transponder 19 ein zu ignorierender Transponder ist, bei der Messung nicht verwertet.

Auch bei dem zweiten Signalschwellwert (Filterwert) kann eine Toleranz vorgesehen sein. Von dem RSSI-Wert wird noch ein Toleranzwert subtrahiert, damit der Transponder 19 zuverlässig als nicht zugehörig erkannt wird.

Die Hochfrequenzleistung wird in dem Sender/Empfänger 31 eingestellt, beispielsweise zwischen 10 mW und 500 mW.

Die Transponder 20 bis 29 können nach einem Auslesevorgang für eine vorbestimmte Zeit in einen Nicht-Lesemodus versetzt werden, so dass diese beispielsweise erst nach Ablauf von 20 Sekunden wieder ausgelesen werden können.

Werden mehrere Waren, an denen die Transponder 20 bis 29 angeordnet sind, in den Sende-/Empfangsbereich der Antenne 13 gebracht, das heißt auf der Auflagefläche 3 angeordnet, wird der erste Signalschwellwert (Startwert) erreicht oder überschritten und der Lese- und Datenverarbeitungszyklus wird gestartet. Bei dem Start werden die vorhergehenden ausgelesenen Daten von Transpondern gelöscht oder ignoriert. Der Lese- und Datenverarbeitungszyklus wird für eine bestimmte Zeitspanne gestartet und die Transponder 20 bis 29 werden ausgelesen. Die von den selektierten Transpondern 20 bis 29 erfassten Daten werden an den Computer 15 weitergeleitet. Über den Computer 15 ist damit ersichtlich, dass die Waren mit den Transpondern 20 bis 29 erfasst wurden. Diese Waren können dann zum Beispiel eingebucht oder ausgebucht oder abgerechnet oder dergleichen werden.

Fig. 8 zeigt ein Schreib-/Lesegerät 14 mit verschiedenen Komponenten, die in dem Schreib-/Lesegerät 14 angeordnet sind.

In dem Schreib-/Lesegerät ist ein Sender/Empfänger 31 angeordnet. Der Sender/Empfänger 31 erzeugt ein hochfrequentes elektromagnetisches Wechselfeld in der Sende-/Empfangsantenne 13, die lediglich schematisch dargestellt ist.

Darüber hinaus weist das Schreib-/Lesegerät 14 eine Filtereinrichtung 30 auf zur Selektion wenigstens eines der ausgelesenen Transponder. Die Filtereinrichtung 30 kann auch aus einem Software-Algorithmus bestehen.

Darüber hinaus ist eine Auswerteeinheit 35 vorgesehen. Die Auswerteeinheit 35 wertet die aus den Transpondern ausgelesenen Daten aus und gibt diese an eine Datenschnittstelle 32 weiter. Von der Datenschnittstelle 32 können die Daten an einen Computer 15 oder eine andere Anzeigevorrichtung 36, beispielsweise ein mobiles Telefon weitergeleitet werden. Die Auswerteeinheit 35 kann einen Arbeitsspeicher (nicht dargestellt) aufweisen zur temporären Speicherung der Daten.

Der Sender-/Empfänger 31, die Filtereinrichtung 30 und die Auswerteeinheit 35 werden von einer Steuereinrichtung 33 gesteuert. Die Steuereinrichtung 33 steuert darüber hinaus die Datenschnittstelle 32.

Die Steuereinrichtung 33 kann von dem Computer 15 über die Datenschnittstelle 32 Daten, wie zum Beispiel den ersten oder zweiten Signalschwellwert erhalten.

Die Steuereinrichtung 33 kann auch weitere in Fig. 8 nicht dargestellte Funktionseinheiten steuern.

Über den Sender/Empfänger 31 steuert die Steuereinrichtung 33 beispielsweise die abgestrahlte Leistung der Antenne 13.

Wie in Fig. 8 dargestellt, sind die verschiedenen Funktionseinheiten, wie Sender/Empfänger 31, Filtereinrichtung 30, Auswerteeinheit 35, Datenschnittstelle 32 und Steuereinrichtung 33 über entsprechende Datenleitungen und/oder Kommunikationsleitungen miteinander verbunden.

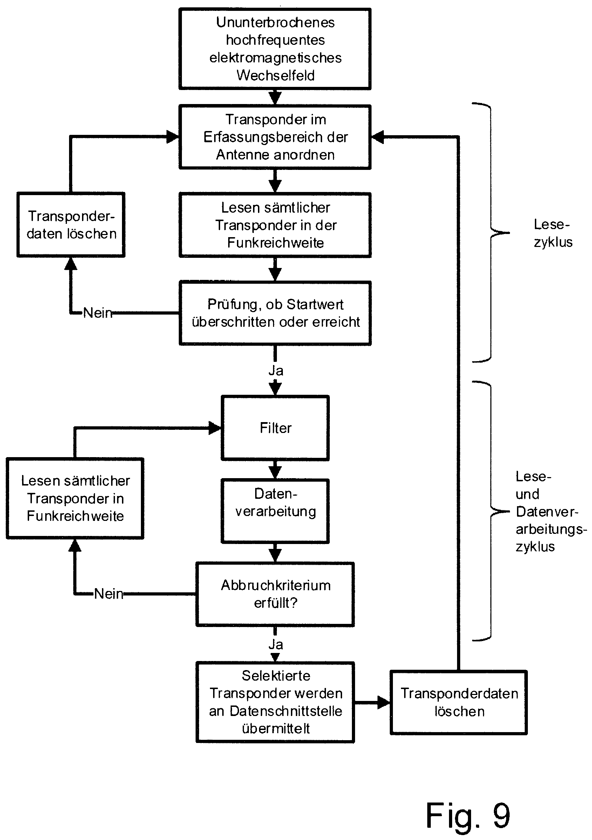

Fig. 9 zeigt schematisch den Ablauf des erfindungsgemäßen Verfahrens.

Es wird ein hochfrequentes, elektromagnetisches Wechselfeld abgestrahlt, welches im Wesentlichen ununterbrochen abgestrahlt wird. Das elektromagnetische Wechselfeld wird lediglich zum Umschalten der Antennen oder Zurücksetzen der Transponder in den Grundzustand unterbrochen. Diese Unterbrechung ist vorteilhaft kürzer als 30 Millisekunden. Die Unterbrechung ist besonders vorteilhaft kürzer als 10 Millisekunden.

Diese Unterbrechung erfolgt automatisch. Diese Unterbrechung ist keine durch Bedienpersonen initiierte Unterbrechung.

Sämtliche in der Funkreichweite der Antenne 13 angeordneten Transponder 19 bis 29 werden gelesen.

Anschließend erfolgt eine Prüfung, ob ein Startwert (erster Signalschwellwert) überschritten wird. Wird der Startwert nicht überschritten, werden die ausgelesenen Daten der Transponder 19 bis 29 gelöscht und es werden die in der Funkreichweite der Antenne 13 angeordneten Transponder 19 bis 29 wiederum ausgelesen. Dieser Vorgang ist der Lesezyklus.

Wird der Startwert überschritten oder erreicht, startet der Lese- und Datenverarbeitungszyklus. Es erfolgt eine Filterung in der Filtereinrichtung 30. Das heißt, dass im vorliegenden Fall der Transponder 19 ausgefiltert wird. Für die Daten der Transponder 20 bis 29 erfolgt der Datenverarbeitungszyklus.

Ist eines der Abbruchkriterien erfüllt, nämlich

- eine vorbestimmte Zeit wird erreicht oder
- bei Unterschreiten eines dritten Signalschwellwertes oder
- wenn sämtliche in dem Lese- und Datenverarbeitungszyklus ausgelesenen Transponder 20 bis 29 wenigstens zwei Mal gelesen wurden,

werden die Daten der selektierten Transponder 20 bis 29 an die Datenschnittstelle 32 übermittelt.

Anschließend werden die Transponderdaten gelöscht.

Das erfindungsgemäße Verfahren kann anschließend wieder erneut durchgeführt werden.

Ist keines der Abbruchkriterien erfüllt, wird das Lesen sämtlicher in der Funkreichweite befindlichen Transponder 19 bis 29 fortgesetzt und in der Filtereinrichtung 30 werden wiederum die nicht zu selektierenden Transponder 19 ausgefiltert und die Daten der zu selektierenden Transponder 20 bis 29 werden an die Datenschnittstelle übermittelt und weiterverarbeitet.

Bezugszahlen

1    Vorrichtung
2    Grundfläche
3    Auflagefläche

4       Seitenflächen
5       Waren (Bücher, T-Shirts, etc.)
6       Tisch
7       Markierung
8       Anzeigevorrichtung
9       LED-Anzeigevorrichtung
10      LED-Anzeigevorrichtung
11      USB-Anschluss
12      Anschluss für Spannungsversorgung
13      Sende-/Empfangsantenne
14      Schreib-/Lesegerät
15      Computer
16      Gehäuse
17      Schirmung
18      Verbindungsleitung
19      Transponder
20      Transponder
21      Transponder
22      Transponder
23      Transponder
24      Transponder
25      Transponder
26      Transponder
27      Transponder
28      Transponder
29      Transponder
30      Filtereinrichtung
31      Sender/Empfänger (Hochfrequenz)
32      Datenschnittstelle
33      Steuereinrichtung
34      Empfangsstärkeindikator
35      Auswerteeinheit
36      Anzeigevorrichtung

**Patentansprüche**

1.  Verfahren zur Erfassung, Selektion und Meldung einer Anzahl aus einer Vielzahl von berührungslos auslesbaren Transpondern an eine Auswerteeinheit (35),

    - wobei das Verfahren mit wenigstens einem Schreib-/Lesegerät (14) oder Lesegerät durchgeführt wird,
    - wobei das Schreib-/Lesegerät (14) oder das Lesegerät ein hochfrequentes elektromagnetisches Wechselfeld erzeugt und über eine Sende-/Empfangsantenne (13) abstrahlt,
    - wobei das Schreib-/Lesegerät (14) oder das Lesegerät Daten des oder der innerhalb einer Funkreichweite befindlichen Transponder (19 bis 29) mittels zumindest eines Lesezyklus ausliest und wenigstens ein Datenverarbeitungszyklus durchgeführt wird,
    - wobei das Schreib-/Lesegerät (14) oder das Lesegerät mit einer Filtereinrichtung (30) wenigstens einen der ausgelesenen Transponder (19 bis 29) selektiert,
    - wobei das Schreib-/Lesegerät (14) oder das Lesegerät den oder die selektierten Transponder (20 bis 29) an die Auswerteeinheit (35) meldet,

    **dadurch gekennzeichnet,**

    - **dass** ein kontinuierliches Auslesen der Daten der Transponder (19 bis 29) erfolgt,
    - **dass**, wenn ein Transponder (19 bis 29) innerhalb der Funkreichweite des Schreib-/Lesegerätes (14) oder des Lesegerätes angeordnet wird, ein RSSI-Wert dieses Transponders (19 bis 29) erfasst wird,
    - **dass** ein erster Signalschwellwert verwendet wird,
    - **dass** bei Erreichen oder Überschreiten des ersten Signalschwellwertes durch einen Transponder (19 bis 29) der Lese- und Datenverarbeitungszyklus der Daten des oder der Transponder (20 bis 29) gestartet wird, das heißt, wenn der RSSI-Wert, Received Signal Strength Indicator des oder der Transponder (19 bis 29), die in dem Erfassungsbereich des Schreib-/Lesegerätes (14) oder des Lesegerätes angeordnet sind, größer als der erste Signalschwellwert oder gleich dem ersten Signalschwellwert ist, der Lese- und Datenverarbeitungszyklus gestartet wird,

- **dass** ein vom ersten Signalschwellwert sich unterscheidender zweiter Signalschwellwert verwendet wird zum Herausfiltern von zu ignorierenden Transpondern (19),- dass die Signalschwellwerte als RSSI-Werte ausgebildet sind,

- **dass** der Lese- und Datenverarbeitungszyklus beendet wird,

- **dass** ausgewertete Daten der Transponder (20 bis 29) an die Auswerteeinheit (35) übermittelt werden,

- **dass** nach einer Übermittlung der ausgewerteten Daten der Transponder (20 bis 29) an die Auswerteeinheit (35) die Daten der Transponder (19 bis 29) ignoriert oder gelöscht werden.

2.  Verfahren nach Anspruch 1, **dadurch gekennzeichnet, dass** der Lese- und Datenverarbeitungszyklus beendet wird,

    - nach einer vorbestimmten Zeit oder
    - bei Unterschreiten eines dritten Signalschwellwertes oder
    - wenn ein Transponder (20 bis 29) mit dem kleinsten RSSI-Wert sämtlicher in dem Lese- und Datenverarbeitungszyklus ausgelesenen Transponder wenigstens zwei Mal gelesen wurde.

3.  Verfahren nach Anspruch 2, **dadurch gekennzeichnet, dass** der dritte Signalschwellwert als RSSI-Wert, Received Signal Strength Indicator verwendet wird.

4.  Verfahren nach einem der vorhergehenden Ansprüche, **dadurch gekennzeichnet, dass** die Daten der Transponder (20 bis 29) in einem Speichermedium abgespeichert oder zwischengespeichert werden.

5.  Verfahren nach einem der vorhergehenden Ansprüche, **dadurch gekennzeichnet, dass** vor dem Lese- und Datenverarbeitungszyklus wenigstens ein Lesezyklus durchgeführt wird, dass während des Lesezyklus die Daten der in einem Erfassungsbereich des Schreib-/Lesegerätes (14) oder des Lesegerätes angeordneten Transponder (20 bis 29) ausgelesen werden, dass geprüft wird, ob der Startwert überschritten wird und dass bei Unterschreiten des Startwertes die Daten der Transponder gelöscht werden und der Lesezyklus erneut gestartet wird.

6.  Verfahren nach einem der vorhergehenden Ansprüche, **dadurch gekennzeichnet, dass** die Transponder (20 bis 29) mindestens ein Mal pro Lesezyklus und/oder mindestens ein Mal pro Lese- und Datenverarbeitungszyklus in einen Grundzustand zurückgesetzt werden.

7.  Verfahren nach Anspruch 6, **dadurch gekennzeichnet, dass** die Transponder (20 bis 29) in einen Grundzustand zurückgesetzt werden:

    - durch Senden eines Protokolls an die Transponder (20 bis 29) oder
    - durch Ablauf einer vorbestimmten Zeitspanne oder
    - durch Ausschalten des hochfrequenten elektromagnetischen Wechselfeldes.

8.  Verfahren nach einem der vorhergehenden Ansprüche, **dadurch gekennzeichnet, dass** die Hochfrequenzleistung einstellbar ist, insbesondere dass die Hochfrequenzleistung zwischen 10 mW - Milliwatt - und 500 mW einstellbar ist.

9.  Verfahren nach einem der vorhergehenden Ansprüche, **dadurch gekennzeichnet, dass** ein Lese- und Datenverarbeitungszyklus eine Zeitspanne von maximal fünf Sekunden aufweist.

10. Verfahren nach einem der vorhergehenden Ansprüche, **dadurch gekennzeichnet, dass** der RSSI-Wert eines Transponders (20 bis 29) zwischen -90 dBm bis -20 dBm - Dezibel bezogen auf 1 Milliwatt - liegt, und dass Transponder (20 bis 29), die bei ein und derselben Messung ausgelesen werden und die RSSI-Werte aufweisen, die um Werte von weniger als 6 dB voneinander abweichen, mehrmals gemessen werden.

11. Verfahren nach einem der vorhergehenden Ansprüche, **dadurch gekennzeichnet, dass** wenigstens ein erster Transponder (19 bis 29) innerhalb der Funkreichweite des Schreib-/Lesegerätes oder des Lesegerätes angeordnet wird, dass der RSSI-Wert dieses ersten Transponders (20) erfasst wird, dass geprüft wird, ob der RSSI-Wert größer als der erste Signalschwellwert ist oder ob der RSSI-Wert gleich dem ersten Signalschwellwert ist, und dass die Verarbeitung der Daten weiterer Transponder (21 bis 29) gestartet wird, wenn der RSSI-Wert des wenigstens einen ersten Transponders (20) größer als der erste Signalschwellwert ist oder wenn der RSSI-Wert des Transponder gleich dem ersten Signalschwellwert ist.

12. Verfahren nach einem der vorhergehenden Ansprüche, **dadurch gekennzeichnet, dass** eine Anzahl n von auszulesenden Transpondern festgelegt wird, dass die RSSI-Werte der einzelnen Transponder (19 bis 29) ermittelt werden und dass die Daten der n Transponder (20 bis 29) mit den größten RSSI-Werten weiterverarbeitet werden.

13. Verfahren nach Anspruch 1, **dadurch gekennzeichnet, dass** das Schreib-/Lesegerät (14) oder das Lesegerät wenigstens eine Sende-/Empfangsantenne oder wenigstens eine Sende- und wenigstens eine Empfangsantenne aufweist, und dass die Verfahrensschritte des Anspruches 1 für jede Antenne durchgeführt werden.

14. Verfahren nach einem der vorhergehenden Ansprüche, **dadurch gekennzeichnet, dass** verschiedene Profile für verschiedene Applikationen vordefiniert werden.

15. Vorrichtung zur Durchführung des Verfahrens nach Anspruch 1 mit einem Schreib-/Lesegerät oder Lesegerät zum Auslesen, zur Selektion und Meldung einer Anzahl aus einer Vielzahl von berührungslos auslesbaren Transpondern (20 bis 29) an eine Auswerteeinheit (35),

    - wobei das Schreib-/Lesegerät (14) oder das Lesegerät zum Auslesen der innerhalb einer Funkreichweite befindlichen Transponder (20 bis 29) mittels zumindest eines Lese- und Datenverarbeitungszyklus ausgebildet ist,
    - wobei die Vorrichtung (1) wenigstens eine Sende-/Empfangsantenne (13) aufweist,
    - wobei das Schreib-/Lesegerät (14) oder das Lesegerät eine Filtereinrichtung (30) zur Selektion zumindest eines der ausgelesenen Transponder (19 bis 29) aufweist,
    - wobei das Schreib-/Lesegerät (14) oder das Lesegerät zur Meldung des oder der selektierten Transponder (20 bis 29) an die Auswerteeinheit (35) ausgebildet ist,
    - wobei das Schreib-/Lesegerät (14) oder das Lesegerät einen integrierten Empfangssignalstärke-Indikator (34) zum Erfassen eines RSSI-Wertes für die von den Transpondern (20 bis 29) empfangenen Signale aufweist,
    - wobei die Vorrichtung (1) einen Sender/Empfänger (31) zur Erzeugung eines hochfrequenten elektromagnetischen Wechselfeldes aufweist,

    **dadurch gekennzeichnet,**

    - **dass** die Vorrichtung (1) eine Auflagefläche (3) für die zu erfassenden Waren (5) mit den an den Waren (5) angeordneten Transpondern (20 bis 29) aufweist,
    - **dass** innerhalb oder unterhalb der Auflagefläche (3) die wenigstens eine Sende-/Empfangsantenne (13) oder wenigstens eine Sende- und wenigstens eine Empfangsantenne angeordnet ist/sind.

16. Vorrichtung nach Anspruch 15, **dadurch gekennzeichnet, dass** die Auflagefläche (3) wenigstens eine Markierung (7) für die auf der Auflagefläche (3) anzuordnenden Waren (5) aufweist.

17. Vorrichtung nach Anspruch 15 oder 16, **dadurch gekennzeichnet, dass** die Vorrichtung (1) sechs Seiten aufweist, und dass die wenigstens eine Sende-/Empfangsantenne (13) oder die wenigstens eine Sende- und wenigstens eine Empfangsantenne des Schreib-/Lesegerätes (14) oder des Lesegerätes an fünf von den sechs Seiten geschirmt ausgebildet ist.

18. Vorrichtung nach einem der Ansprüche 15 bis 17, **dadurch gekennzeichnet, dass** eine Filtereinrichtung (30) zur Filterung wenigstens eines Nummernbereiches UID/EPC der Transponder (20 bis 29) vorgesehen ist.

**Claims**

1. Method for detecting, selecting and reporting to an evaluation unit (35) a number among a plurality of contactlessly readable transponders,

    - wherein the method is carried out using at least one reader/writer (14) or reader,
    - wherein the reader/writer (14) or reader generates a high-frequency alternating electromagnetic field and emits it via a transceiving antenna (13),

- wherein the reader/writer (14) or reader reads data from the transponder(s) (19 to 29) located within a radio range by means of at least one reading cycle, and at least one data processing cycle is carried out,

- wherein the reader/writer (14) or reader selects at least one of the read transponders (19 to 29) by using a filter means (30),

- wherein the reader/writer (14) or reader reports the selected transponder(s) (20 to 29) to the evaluation unit (35),

**characterized**

- **in that** the data is continuously read from the transponders (19 to 29),

- **in that**, when a transponder (19 to 29) is arranged within the radio range of the reader/writer (14) or reader, an RSSI value of this transponder (19 to 29) is detected,

- **in that** a first signal threshold is used,

- **in that**, when the first signal threshold is reached or exceeded by a transponder (19 to 29), the reading and data processing cycle of the data from the transponder(s) (20 to 29) is started, that is to say the reading and data processing cycle is started when the RSSI value, Received Signal Strength Indicator, of the transponder(s) (19 to 29) arranged in the detection area of the reader/writer (14) or reader is greater than the first signal threshold or equal to the first signal threshold,

- **in that** a second signal threshold, which differs from the first signal threshold, is used to filter out transponders (19) that are to be disregarded,

- **in that** the signal thresholds are in the form of RSSI values,

- **in that** the reading and data processing cycle is ended,

- **in that** evaluated data from the transponders (20 to 29) is transmitted to the evaluation unit (35),

- **in that**, after the evaluated data from the transponders (20 to 29) has been transmitted to the evaluation unit (35), the data from the transponders (19 to 29) is disregarded or deleted.

2. Method according to claim 1, **characterized in that** the reading and data processing cycle is ended

- after a predetermined time, or
- when there is a drop below a third signal threshold, or
- when a transponder (20 to 29) that has the lowest RSSI value of all the transponders read in the reading and data processing cycle has been read at least twice.

3. Method according to claim 2, **characterized in that** the third signal threshold is used as the RSSI value, Received Signal Strength Indicator.

4. Method according to any one of the preceding claims, **characterized in that** the data from the transponders (20 to 29) is stored or buffer-stored in a storage medium.

5. Method according to any one of the preceding claims, **characterized in that** at least one reading cycle is carried out prior to the reading and data processing cycle, **in that** during the reading cycle the data is read from the transponders (20 to 29) arranged in a detection area of the reader/writer (14) or reader, **in that** a check is carried out to ascertain whether the start value is exceeded, and **in that**, if the start value is not exceeded, the data from the transponders is deleted and the reading cycle is started again.

6. Method according to any one of the preceding claims, **characterized in that** the transponders (20 to 29) are reset to a basic state at least once per reading cycle and/or at least once per reading and data processing cycle.

7. Method according to claim 6, **characterized in that** the transponders (20 to 29) are reset to a basic state:

- by sending a protocol to the transponders (20 to 29), or
- after a predetermined duration, or
- by switching off the high-frequency alternating electromagnetic field.

8. Method according to any one of the preceding claims, **characterized in that** the high-frequency power is adjustable, in particular **in that** the high-frequency power is adjustable between 10 mW - milliwatt and 500 mW.

9. Method according to any one of the preceding claims, **characterized in that** a reading and data processing cycle has a duration of at most 5 seconds.

10. Method according to any one of the preceding claims, **characterized in that** the RSSI value of a transponder (20 to 29) is between -90 dBm to -20 dBm - decibels per milliwatt -and **in that** transponders (20 to 29) which are read during one and the same measurement and which have RSSI values that differ from each other by values of less than 6 dB are measured multiple times.

11. Method according to any one of the preceding claims, **characterized in that** at least one first transponder (19 to 29) is arranged within the radio range of the reader/writer or reader, **in that** the RSSI value of this first transponder (20) is detected, **in that** a check is carried out to ascertain whether the RSSI value is greater than the first signal threshold or whether the RSSI value is equal to the first signal threshold, and **in that** the processing of the data from other transponders (21 to 29) is started if the RSSI value of the at least one first transponder (20) is greater than the first signal threshold or if the RSSI value of the transponder is equal to the first signal threshold.

12. Method according to any one of the preceding claims, **characterized in that** a number n of transponders to be read is defined, **in that** the RSSI values of the individual transponders (19 to 29) are determined, and **in that** the data from the n transponders (20 to 29) that have the greatest RSSI values is further processed.

13. Method according to claim 1, **characterized in that** the reader/writer (14) or reader has at least one transceiving antenna or at least one transmitting antenna and at least one receiving antenna, and **in that** the method steps of claim 1 are carried out for each antenna.

14. Method according to any one of the preceding claims, **characterized in that** different profiles are predefined for different applications.

15. Device for carrying out the method according to claim 1, comprising a reader/writer or reader for reading, selecting and reporting to an evaluation unit (35) a number among a plurality of contactlessly readable transponders (20 to 29),

- wherein the reader/writer (14) or reader is designed to read the transponders (20 to 29) located within a radio range by means of at least one reading and data processing cycle,
- wherein the device (1) comprises at least one transceiving antenna (13),
- wherein the reader/writer (14) or reader has a filter means (30) for selecting at least one of the read transponders (19 to 29),
- wherein the reader/writer (14) or reader is designed to report the selected transponder(s) (20 to 29) to the evaluation unit (35),
- wherein the reader/writer (14) or reader has an integrated received signal strength indicator (34) for detecting an RSSI value for the signals received from the transponders (20 to 29),
- wherein the device (1) comprises a transceiver (31) for generating a high-frequency alternating electromagnetic field,

**characterized**

- **in that** the device (1) has a bearing surface (3) for the goods (5) to be detected that have the transponders (20 to 29) arranged on the goods (5),
- **in that** the at least one transceiving antenna (13) or the at least one transmitting antenna and the at least one receiving antenna is/are arranged within or beneath the bearing surface (3).

16. Device according to claim 15, **characterized in that** the bearing surface (3) has at least one marking (7) for the goods (5) to be arranged on the bearing surface (3).

17. Device according to claim 15 or 16, **characterized in that** the device (1) has six sides, and **in that** the at least one transceiving antenna (13) or the at least one transmitting antenna and the at least one receiving antenna of the reader/writer (14) or reader is designed to be shielded on five of the six sides.

18. Device according to any one of claims 15 to 17, **characterized in that** a filter means (30) is provided for filtering at least one range of UID/EPC numbers of the transponders (20 to 29).

**Revendications**

1. Procédé de capter, de sélectionner et de communiquer avec un certain nombre parmi un grand nombre d'éléments lisibles sans contact de transpondeurs au niveau d'une unité d'évaluation (35),

   - le procédé étant réalisé avec au moins un dispositif d'écriture/lecture (14) ou un dispositif de lecture,
   - le dispositif d'écriture/lecture (14) ou le dispositif de lecture générant un champ électromagnétique alternatif haute fréquence et rayonne via une antenne d'émission/réception (13),
   - dans lequel le dispositif d'écriture/lecture (14) ou le dispositif de lecture lit des données du ou des transpondeurs (19 à 29) situés à portée radio au moyen d'au moins un cycle de lecture, et au moins un cycle de traitement de données est effectué,
   - le dispositif d'écriture/lecture (14) ou le dispositif de lecture sélectionne au moins un des transpondeurs qui ont été lus (19 à 29) avec un dispositif de filtrage (30),
   - le dispositif d'écriture/lecture (14) ou le dispositif de lecture du ou des transpondeurs sélectionnés (20 à 29) se met en communication avec l'unité d'évaluation (35),

   **caractérisé en ce que**,

   - les données des transpondeurs (19 à 29) sont lues en permanence,
   - et **en ce que** si un transpondeur (19 à 29) se trouvé dans la zone de portée radio du dispositif d'écriture/lecture (14) ou du dispositif de lecture, une valeur RSSI de ce transpondeur (19 à 29) est captée,
   - une première valeur seuil de signal est utilisée,
   - lorsque la première valeur seuil de signal est atteinte ou dépassée par un transpondeur (19 à 29), le cycle de lecture et de traitement des données du ou des transpondeurs (20 à 29) est démarré, c'est-à-dire lorsque la valeur RSSI, Indicateur de l'intensité du signal reçu du ou des transpondeurs (19 à 29), qui se trouve(nt) dans la zone de détection du dispositif de lecture/écriture (14) ou du dispositif de lecture, est supérieur à la première valeur seuil de signal ou égal à la première valeur seuil de signal, le cycle de lecture et de traitement des données est démarré,
   - qu'une deuxième valeur seuil de signal différente de la première valeur seuil de signal est utilisée pour filtrer les transpondeurs (19) qui doivent être ignorés,
   - que les valeurs seuils de signal sont constituées comme des valeurs RSSI,
   - que le cycle de lecture et de traitement des données est terminé,
   - que les données évaluées des transpondeurs (20 à 29) sont transmises à l'unité d'évaluation (35),
   - de sorte qu'après les données évaluées des transpondeurs (20 à 29) soient transmises à l'unité d'évaluation unité (35), les données des transpondeurs (19 à 29) sont ignorées ou supprimées.

2. Procédé selon la revendication 1, **caractérisé en ce que** le cycle de lecture et de traitement des données est terminé

   - après un temps prédéterminé ou
   - en cas de descente en dessous d'une troisième valeur seuil de signal, ou
   - si un transpondeur (20 à 29) avec 1a plus petite valeur RSSI de tous les transpondeurs lus dans le cycle de lecture et de traitement des données a été lu au moins deux fois.

3. Procédé selon la revendication 2, **caractérisé en ce que** la troisième valeur seuil du signal est utilisée comme valeur RSSI, Indicateur de l'intensité du Signal Reçu.

4. Procédé selon l'une des revendications précédentes, **caractérisé en ce que** les données des transpondeurs (20 à 29) sont stockées ou stockées temporairement dans un support de stockage.

5. Procédé selon l'une des revendications précédentes, **caractérisé en ce qu'**au moins un cycle de lecture est effectué avant le cycle de lecture et de traitement des données, que pendant le cycle de lecture les données dans la zone de détection du dispositif de lecture/écriture (14) ou des transpondeurs (20 à 29) du dispositif de lecture sont lues, et **en ce qu'**il est vérifié si la valeur de départ est dépassée et si la valeur de départ n'est pas atteinte, les données du transpondeur sont supprimées et le cycle de lecture recommence.

6. Procédé selon l'une des revendications précédentes, **caractérisé en ce que** les transpondeurs (20 à 29) sont remis à un état de base au moins une fois par cycle de lecture et/ou au moins une fois par cycle de lecture et de traitement des données.

**7.** Procédé selon la revendication 6, **caractérisé en ce que** les transpondeurs (20 à 29) sont remis à un état de base :

- en envoyant un protocole aux transpondeurs (20 à 29) ou
- à l'expiration d'une période de temps prédéterminée ou
- en coupant le champ électromagnétique alternatif haute fréquence.

**8.** Procédé selon l'une des revendications précédentes, **caractérisé en ce que** la puissance haute fréquence est réglable, notamment que la puissance haute fréquence est réglable entre 10 mW (milliwatt) et 500 mW.

**9.** Procédé selon l'une des revendications précédentes, **caractérisé en ce qu'**un cycle de lecture et de traitement de données a une durée maximale de cinq secondes.

**10.** Procédé selon l'une des revendications précédentes, **caractérisé en ce que** la valeur RSSI d'un transpondeur (20 à 29) est comprise entre -90 dBm et -20 dBm (décibels par milliwatt), et ce que des transpondeurs (20 à 29), qui sont lus au cours d'une seule et même mesure et ont des valeurs RSSI qui diffèrent les unes des autres par des valeurs inférieures à 6 dB, sont mesurées plusieurs fois.

**11.** Procédé selon l'une des revendications précédentes, **caractérisé en ce qu'**au moins un premier transpondeur (19 à 29) à portée radio du dispositif d'écriture/lecture ou le dispositif de lecture est agencé de manière à ce que la valeur RSSI de ce premier transpondeur (20) soit captée, qu'il soit vérifié si la valeur RSSI est supérieure à la première valeur seuil du signal ou si la valeur RSSI est égale à la première valeur seuil de signal et **en ce que** le traitement des données provenant d'autres transpondeurs (21 à 29) démarre lorsque la valeur RSSI d'au moins un premier transpondeur (20) est supérieure à la première valeur seuil du signal ou si la valeur RSSI du transpondeur est égale à la première valeur seuil de signal.

**12.** Procédé selon l'une quelconque des revendications précédentes, **caractérisé en ce qu'**on détermine un nombre n de transpondeurs à lire, que l'on détermine les valeurs RSSI des transpondeurs individuels (19 à 29) et **en ce que** on poursuit le traitement des données des n transpondeurs (20 à 29) avec les plus grandes valeurs RSSI.

**13.** Procédé selon la revendication 1, **caractérisé en ce que** le dispositif d'écriture/lecture (14) ou le dispositif de lecture présente au moins une antenne d'émission/réception ou au moins une antenne d'émission et au moins une antenne de réception, et **en ce que** les étapes du procédé selon la revendication 1 sont effectué pour chaque antenne.

**14.** Procédé selon l'une des revendications précédentes, **caractérisé en ce que** différents profils sont prédéfinis pour différentes applications.

**15.** Dispositif pour la mise en oeuvre du procédé selon la revendication 1 avec un dispositif d'écriture/lecture ou un dispositif de lecture pour capter, sélectionner et communiquer avec un certain nombre parmi un grand nombre de transpondeurs sans contact (20 à 29) au niveau d'une unité d'évaluation (35),

- dans lequel le dispositif d'écriture/lecture (14) ou le dispositif de lecture est construit pour lire des données du ou des transpondeurs (20 à 29) situés à portée radio en utilisant au moins un cycle de lecture et de traitement de données,
- dans lequel le dispositif (1) présente au moins une antenne d'émission/réception (13),
- dans lequel le dispositif d'écriture/lecture (14) ou le dispositif de lecture présente un dispositif de filtrage (30) pour sélectionner au moins un des transpondeurs de lecture (19 à 29),
- dans lequel le dispositif d'écriture/lecture (14) ou le dispositif de lecture ' est conçu pour signaler le(s) transpondeur(s) sélectionné(s) (20 à 29) à l'unité d'évaluation (35),
- dans lequel le dispositif d'écriture/lecture (14) ou le dispositif de lecture comportant un indicateur intégré d'intensité du signal reçu (34) pour capter une valeur RSSI pour les signaux reçus des transpondeurs (20 à 29),
- dans lequel le dispositif (1) comporte un émetteur/récepteur (31) pour générer un champ électromagnétique alternatif haute fréquence, **caractérisé en ce que**
- le dispositif (1) présente une surface d'appui (3) pour les marchandises (5) à détecter avec les transpondeurs (20 à 29) qui sont disposés sur les marchandises (5),
- **en ce qu'**à l'intérieur ou au-dessous de la surface d'appui (3) le au moins une antenne émettrice/réceptrice (13) ou au moins une antenne émettrice et au moins une antenne réceptrice est/sont disposées.

**16.** Dispositif selon la revendication 15, **caractérisé en ce que** la surface d'appui (3) présente au moins un marquage (7) pour que les marchandises (5) soient disposées sur la surface d'appui (3).

17. Dispositif selon la revendication 15 ou 16, **caractérisé en ce que** le dispositif (1) présente six côtés, et que l'au moins une antenne émettrice/réceptrice (13) ou l'au moins une antenne émettrice et au moins une antenne réceptrice du dispositif d'écriture/lecture (14) ou du dispositif de lecture est conçue pour être blindé sur cinq des six côtés.

18. Dispositif selon l'une des revendications 15 à 17, **caractérisé en ce qu'**un dispositif de filtrage (30) est prévu pour filtrer au moins une plage numérique UID/EPC des transpondeurs (20 à 29).

Fig. 1

Fig. 2

Fig. 5

Fig. 3

LED

AN / ON          Transponder
                 gelesen / read

Fig. 4

EP 4 095 740 B1

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012212856 B4
- EP 2560125 A1

- EP 2990989 A1